# EUROPEAN PATENT APPLICATION

(11) **EP 4 654 380 A1**
(43) Date of publication of application: **26.11.2025**
(21) Application number: 24760511.6
(22) Date of filing: 06.02.2024
(51) Int. Cl.: H01Q 1/38, H01Q 1/24, H04M 1/02, G09F 9/30, H01Q 5/25

(54) **ELECTRONIC DEVICE INCLUDING ANTENNA**

(30) Priority: 25.02.2023 KR 20230025439; 27.03.2023 KR 20230040084
(71) Applicant: Samsung Electronics Co., Ltd., Suwon-si, Gyeonggi-do 16677 (KR)
(72) Inventor: YU, Changha, Suwon-si Gyeonggi-do 16677 (KR); SEO, Mincheol, Suwon-si Gyeonggi-do 16677 (KR); LEE, Sangmok, Suwon-si Gyeonggi-do 16677 (KR); KANG, Woosuk, Suwon-si Gyeonggi-do 16677 (KR); KIM, Hyunsuk, Suwon-si Gyeonggi-do 16677 (KR); PARK, Gyubok, Suwon-si Gyeonggi-do 16677 (KR); LEE, Wonho, Suwon-si Gyeonggi-do 16677 (KR); CHUN, Jaebong, Suwon-si Gyeonggi-do 16677 (KR)
(74) Representative: HGF
(86) International application number: PCT/KR2024/001770
(87) International publication number: WO 2024/177320

(57) **Abstract**

This electronic device comprises: a housing including a frame that has a region configured to function as a slot antenna; and a wireless communication circuit configured to communicate through the region. The frame includes: a conductive part formed at least partially along the perimeter of the frame; a support part of the frame; and a bridge part formed between the conductive part and the support part, wherein the bridge part includes a first connection portion disposed between a first region of the conductive part and the support part. A second connection portion is provided between a second region of the conductive part and the support part. The region described above includes: a first longitudinal portion, between the first connection portion of the bridge part and the second connection portion of the bridge part, having a first longitudinal direction going toward the inside of the housing; and a second longitudinal portion, between the first region of the conductive part and the second region of the conductive part, at least partially having a second longitudinal direction going from the front surface to the rear surface of the housing.

## Description

### TECHNICAL FIELD

The disclosure relates to an electronic device including an antenna.

### BACKGROUND ART

An electronic device may transmit a signal through an antenna or receive a signal through an antenna. The electronic device may include a plurality of antennas to support various frequency bands. For example, a conductive portion of a metal frame of the electronic device may operate as a radiator of the antenna for transmitting and/or receiving the signal.

The above information is presented as background information only to assist with an understanding of the disclosure. No determination has been made, and no assertion is made, as to whether any of the above might be applicable as prior art with regard to the disclosure.

### DISCLOSURE

### Technical Solution

Aspects of the disclosure are to address at least the above-mentioned problems and/or disadvantages and to provide at least the advantages described below. Accordingly, an aspect of the disclosure is to provide an electronic device including an antenna.

Additional aspects will be set forth in part in the description which follows and, in part, will be apparent from the description, or may be learned by practice of the presented embodiments.

In accordance with aspect of the disclosure, an electronic device is provided. The electronic device comprises a housing comprising a frame having a region configured to function as a slot antenna and a wireless communication circuit configured to perform a communication through the region. The frame includes a conductive portion at least partially formed along a periphery of the frame, a support portion of the frame, and a bridge portion formed between the conductive portion and the support portion. The bridge portion includes a first connection portion disposed between a first region of the conductive portion and the support portion, and includes a second connection portion disposed between a second region of the conductive portion and the support portion. The region includes a first elongated portion having a first longitudinal direction toward an interior of the housing, between the first connection portion of the bridge portion and the second connection portion of the bridge portion. The region includes a second elongated portion having a second longitudinal direction at least partially from a rear side to a front side of the housing, between the first region of the conductive portion and the second region of the conductive portion.

In accordance with an aspect of the disclosure, an electronic device is provided. The electronic device includes a wireless communication circuit, a housing comprising a metal frame having a slot region, and a display. The metal frame includes a conductive portion formed at an edge of the metal frame, a support formed within the metal frame, and a bridge portion formed between the conductive portion and the support. The bridge portion includes a first connection portion disposed between a first region of the conductive portion and the support and a second connection portion disposed between a second region of the conductive portion and the support. The slot region includes a first slot portion region and a second slot portion region. The first slot portion region is formed to penetrate one surface of the bridge portion in a direction in which a display region of the display faces, between the first connection portion of the bridge portion and the second connection portion of the bridge portion. The second slot portion region is formed to penetrate one surface of the conductive portion in a direction toward a side of the display region, between the first region of the conductive portion and the second region of the conductive portion. The wireless communication circuit is configured to perform a communication based on the slot region.

In accordance with aspect of the disclosure, an electronic device is provided. The electronic device includes a wireless communication circuit, a housing comprising a metal frame having a slot region, and a display. The metal frame includes a conductive portion formed at an edge of the metal frame, a support formed within the metal frame, and a bridge portion formed between the conductive portion and the support. The bridge portion includes a first connection portion disposed between a first region of the conductive portion and the support and a second connection portion disposed between a second region of the conductive portion and the support. The slot region includes a first slot portion region and a second slot portion region. The first slot portion region is formed on one surface of the bridge portion in a direction in which a display region of display faces, between the first connection portion of the bridge portion and the second connection portion of the bridge portion. The second slot portion region is formed on one surface of the conductive portion in a direction toward a side of the display region, between the first region of the conductive portion and the second region of the conductive portion. The wireless communication circuit is configured to perform a communication based on the slot region.

In accordance with aspect of the disclosure, an electronic device is provided. The electronic device comprises a housing comprising a metal frame having a slot region and a wireless communication circuit configured to perform a communication through the slot region. The metal frame includes a conductive portion at least partially formed along a periphery of the metal frame, a support portion of the metal frame, and a bridge portion formed between the conductive portion and the support portion. The bridge portion includes a first connection portion disposed between a first region of the conductive portion and the support portion, and includes a second connection portion disposed between a second region of the conductive portion and the support portion. The slot region includes a first slot portion region and a second slot portion region. The first slot portion region is formed, extending in a direction from the second slot portion region toward an interior of the housing, between the first connection portion of the bridge portion and the second connection portion of the bridge portion. The second slot portion region is formed, extending at least partially from a front side to a rear side of the housing, between the first region of the conductive portion and the second region of the conductive portion.

Other aspects, advantages, and salient features of the disclosure will become apparent to those skilled in the art from the following detailed description, which, taken in conjunction with the annexed drawings, discloses various embodiments of the disclosure.

### DESCRIPTION OF THE DRAWINGS

The above and other aspects, features, and advantages of certain embodiments of the disclosure will be more apparent from the following description taken in conjunction with the accompanying drawings, in which:
FIG. 1 is a block diagram of an electronic device in a network environment according to an embodiment of the disclosure;
FIG. 2A illustrates a first slot portion region of a slot region of an electronic device according to an embodiment of the disclosure;
FIG. 2B illustrates a second slot portion region of a slot region of an electronic device according to an embodiment of the disclosure;
FIG. 3A illustrates a metal frame of an electronic device according to an embodiment of the disclosure;
FIG. 3B illustrates an antenna circuit using a metal frame of an electronic device according to an embodiment of the disclosure;
FIG. 3C illustrates an exploded perspective view for describing a connection between a metal frame and a printed circuit board (PCB) of an electronic device according to an embodiment of the disclosure;
FIGS. 4A, 4B, 4C, and 4D illustrate states of an electronic device including a movable housing according to various embodiments of the disclosure;
FIG. 5 illustrates an electronic device including a movable housing according to an embodiment of the disclosure;
FIG. 6 illustrates an injection molded product disposed within a slot region of an electronic device according to an embodiment of the disclosure;
FIGS. 7A, 7B, 7C, 7D, 7E, and 7F illustrate a feeding circuit for a slot region of an electronic device according to various embodiments of the disclosure;
FIG. 8 illustrates an antenna performance of a slot antenna according to a feeding method of an embodiment of the disclosure;
FIGS. 9A, 9B, 9C, 9D, 9E, 9F, and 9G illustrate a shape of a slot region according to various embodiments of the disclosure;
FIGS. 10A and 10B illustrate an antenna performance of a slot antenna according to a shape of a slot region according to various embodiments of the disclosure;
FIGS. 11A and 11B illustrate an antenna performance of an electronic device according to various embodiments of the disclosure; and
FIGS. 12A, 12B, 12C, and 12D illustrate an antenna performance of a slot antenna according to various embodiments of the disclosure.

The same reference numerals are used to represent the same elements throughout the drawings.

### MODE FOR INVENTION

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The terms used herein, including technical or scientific terms, may have the same meaning as commonly understood by those having ordinary knowledge in the art which the disclosure describes. Among the terms used in the disclosure, terms defined in a general dictionary may be interpreted as having the same or similar meaning as those in the context of the related art, and are not interpreted in an ideal or excessively formal meaning unless clearly defined in the disclosure. In some cases, even terms defined in the disclosure cannot be interpreted to exclude embodiments of the disclosure.

In various embodiments of the disclosure described below, a hardware access method will be described as an example. However, since various embodiments of the disclosure include art using both hardware and software, various embodiments of the disclosure do not exclude a software-based access method.

Terms referring to a part of an electronic device (e.g., a substrate, a print circuit board (PCB), a flexible PCB (FPCB), a module, an antenna, an antenna element, a circuit, a processor, a chip, a component, an equipment, a support member, a support portion, a conductive portion), terms referring to a shape of a part (e.g., a structure body, a structure, a support portion, a contact portion, a protrusion portion, an opening, a slot region), terms referring to a connection portion between structure bodies (e.g., a connection portion, a contact portion, a feeding portion, a support portion, a contact structure body, an conductive member, an assembly), terms referring to a circuit (e.g., a PCB, a FPCB, a signal line, a feeding line, a data line, a radio frequency (RF) signal line, an antenna line, an RF path, an RF module, a RF circuit, a splitter, a divider, a coupler, a combiner), and the like used in the following description are illustrated for convenience of description. Accordingly, the disclosure is not limited to terms to be described below, and other terms having an equivalent technical meaning may be used. In addition, a term, such as '...portion', '...er', '...material', '...body', and the like used below may mean at least one shape structure, or may mean a unit that processes a function.

In addition, in the disclosure, an expression of greater than or less than may be used to determine whether a specific condition is satisfied or fulfilled, but this is only a description for expressing an example and does not exclude description of greater than or equal to or less than or equal to. Conditions described as "greater than or equal to" may be replaced with "greater than", conditions described as "less than or equal to" may be replaced with "less than", and conditions described as "greater than or equal to and less than" may be replaced with "greater than and less than or equal to". In addition, hereinafter, 'A' to 'B' means at least one of the elements from A (including A) to B (including B). Hereinafter, 'C' and/or 'D' means including at least one of 'C' or 'D', that is, {'C', 'D', 'C' and 'D'}.

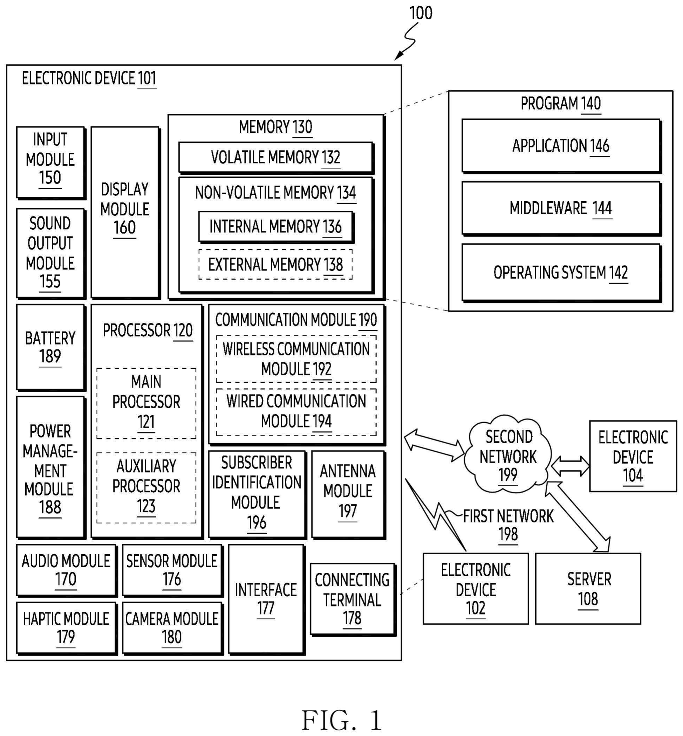

FIG. 1 is a block diagram illustrating an electronic device in a network environment according to an embodiment of the disclosure.

Referring to FIG. 1, an electronic device 101 in a network environment 100 may communicate with an external electronic device 102 via a first network 198 (e.g., a short-range wireless communication network), or at least one of an external electronic device 104 or a server 108 via a second network 199 (e.g., a long-range wireless communication network). According to an embodiment of the disclosure, the electronic device 101 may communicate with the external electronic device 104 via the server 108. According to an embodiment of the disclosure, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments of the disclosure, at least one of the components (e.g., the connecting terminal 178) may be omitted from the electronic device 101, or one or more other components may be added in the electronic device 101. In some embodiments of the disclosure, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment of the disclosure, as at least part of the data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment of the disclosure, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). According to an embodiment of the disclosure, the auxiliary processor 123 (e.g., an image signal processor or a communication processor) may be implemented as part of another component (e.g., the camera module 180 or the communication module 190) functionally related to the auxiliary processor 123. According to an embodiment of the disclosure, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment of the disclosure, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment of the disclosure, the display module 160 may include a touch sensor adapted to detect a touch, or a pressure sensor adapted to measure the intensity of force incurred by the touch.

The audio module 170 may convert a sound into an electrical signal and vice versa. According to an embodiment of the disclosure, the audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment of the disclosure, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. According to an embodiment of the disclosure, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the external electronic device 102). According to an embodiment of the disclosure, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment of the disclosure, the haptic module 179 may include, for example, a motor, a piezoelectric element, or an electric stimulator.

The camera module 180 may capture a still image or moving images. According to an embodiment of the disclosure, the camera module 180 may include one or more lenses, image sensors, image signal processors, or flashes.

The power management module 188 may manage power supplied to the electronic device 101. According to one embodiment of the disclosure, the power management module 188 may be implemented as at least part of, for example, a power management integrated circuit (PMIC).

The battery 189 may supply power to at least one component of the electronic device 101. According to an embodiment of the disclosure, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment of the disclosure, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the external electronic device 104), or a network system (e.g., the second network 199). According to an embodiment of the disclosure, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5ms or less for each of downlink (DL) and uplink (UL), or a round trip of 1 milliseconds (ms) or less) for implementing URLLC.

The antenna module 197 may transmit or receive a signal or power to or from the outside (e.g., the external electronic device) of the electronic device 101. According to an embodiment of the disclosure, the antenna module 197 may include an antenna including a radiating element including a conductive material or a conductive pattern formed in or on a substrate (e.g., a printed circuit board (PCB)). According to an embodiment of the disclosure, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment of the disclosure, another component (e.g., a radio frequency integrated circuit (RFIC)) other than the radiating element may be additionally formed as part of the antenna module 197.

According to various embodiments of the disclosure, the antenna module 197 may form a mmWave antenna module. According to an embodiment of the disclosure, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment of the disclosure, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment of the disclosure, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment of the disclosure, the external electronic device 104 may include an Internet-of-things (IoT) device. The server 108 may be an intelligent server using machine learning and/or a neural network. According to an embodiment of the disclosure, the external electronic device 104 or the server 108 may be included in the second network 199. The electronic device 101 may be applied to intelligent services (e.g., a smart home, a smart city, a smart car, or healthcare) based on 5G communication technology or IoT-related technology.

The electronic device 101 may be equipped with various antennas to support various services. For example, as ultra-wide band (UWB) technology or satellite communication technology for broadband is introduced, additional antennas are required to be included in the electronic device 101. UWB ranging is a technology for measuring distance through a signal in a UWB frequency band. When an antenna for the UWB ranging is disposed on the rear of the electronic device 101, a radiation pattern is concentrated toward the rear direction, and therefore, a deviation in radiation performance may occur according to the direction of the electronic device 101. In order to increase directivity toward an upper direction of the electronic device 101, an additional radiator may be disposed in a region facing the upper direction of the electronic device 101. However, the additional radiator may have difficulties due to antenna design constraints, which must be implemented within a limited space. Due to the mounting space of electronic parts (e.g., a camera, a communication module, a motor, or a speaker) within the electronic device 101, the degree of freedom in antenna design may be reduced.

In order to address the above-described issues, embodiments of the disclosure propose a slot antenna technology for radiating a signal through an opening formed on a metal bridge of a metal frame of the electronic device. Of course, not only the above-described problems but also other issues may be addressed through embodiments of the disclosure.

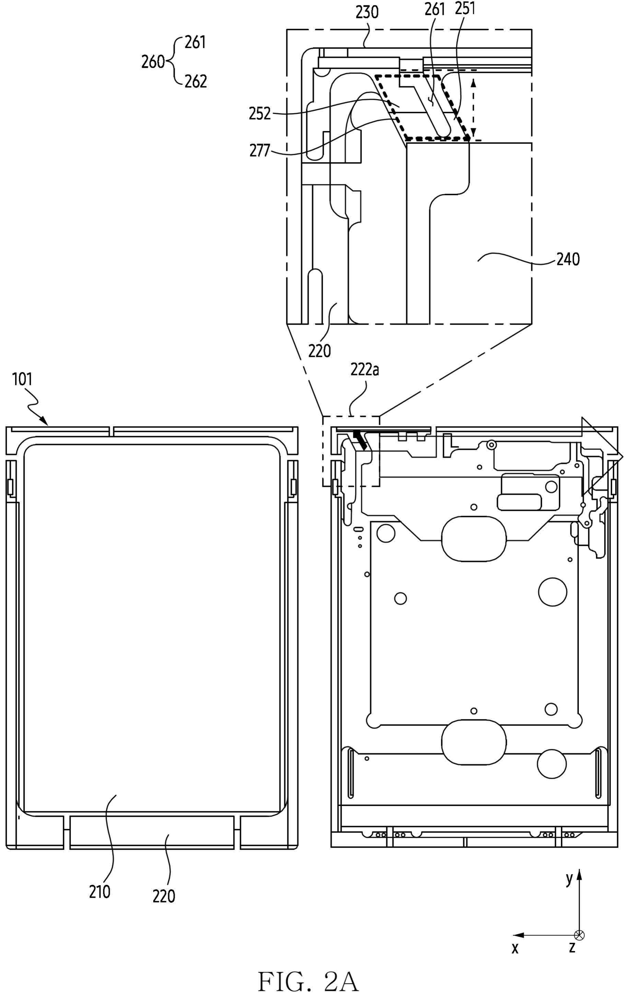

FIG. 2A illustrates a first slot portion region of a slot region of an electronic device according to an embodiment of the disclosure. A same reference number may be referenced for a same description between drawings. The slot region may include a space corresponding to a slot formed within the electronic device. A portion among the slots may be referred to as the first slot portion region. In the aspect that the portion has a length in a particular direction, the portion may be referred to as a first elongated portion. Another portion among the slots may be referred to as a second slot portion region. In the aspect that the other portion has a length in a particular direction, the other portion may be referred to as a second elongated portion. In the disclosure, the term 'slot region' refers to a slot between metal portions, and is not used to limit the embodiments and examples of the electronic device as the electronic device having a hole.

Referring to FIG. 2A, the electronic device 101 may include a display 210 and a metal frame 220. Referring to a portion 222a of the metal frame 220, the metal frame 220 may include a conductive portion 230, a support portion 240, and a bridge portion 277. In an embodiment of the disclosure, the conductive portion 230 may be disposed along at least a portion of an edge of the metal frame 220. For example, the conductive portion 230 may include a side member that forms an exterior of the metal frame 220. In the disclosure, the conductive portion 230 is referred to as a conductive portion, in aspect that the conductive portion 230 is disposed between non-conductive portions of the housing as a portion of a metal frame. But an exterior portion, an outer portion, an edge portion, a side portion, and/or equivalent technical or structural terms may be used instead of the conductive portion. The support portion 240 may be disposed inside the metal frame 220. The support portion 240 may be configured to support components (e.g., the display 210) of the electronic device 101. For example, the support portion 240 may include a bracket. The conductive portion 230 and the support portion 240 may be physically connected through the bridge portion 277.

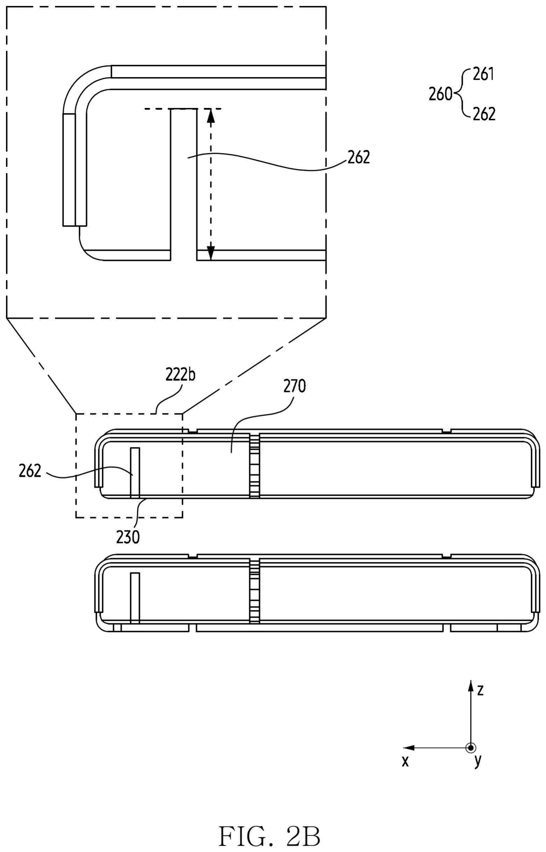

The bridge portion 277 of the metal frame 220 may include a metal bridge for physically connecting the exterior (e.g., the conductive portion 230) and the interior (e.g., the support portion 240) of the metal frame 220. The bridge portion 277 may include a first connection portion 251 and a second connection portion 252. The bridge portion 277 may include a first slot portion region 261 formed between the first connection portion 251 and the second connection portion 252. The first slot portion region 261 may include an opening formed on one surface of the bridge portion 277. According to an embodiment of the disclosure, the metal frame 220 may include a slot region 260 in which a hole is formed in a three-dimensional space rather than a two-dimensional space. For example, the slot region 260 may be formed within the metal frame 220 for mechanical stability. The metal frame 220 include at least one metal side forming a slot of the three-dimensional space in the metal frame 220. The at least one metal side may be formed on the bridge portion 277 and the conductive portion 230. The slot region 260 may include the first slot portion region 261 corresponding to the opening formed in one plane and a second slot portion region (e.g., a second slot portion region 262 of FIG. 2B to be described later) corresponding to the opening formed in other one plane. Depending on the implementation, a non-conductive material (e.g., injection-molded material) may be disposed in the opening of the first slot portion region 261. Depending on the implementation, a non-conductive material (e.g., injection-molded material) may be disposed in the opening of the second slot portion region 262. According to an embodiment of the disclosure, a space corresponding to the slot region 260 may be filled with a non-conductive dielectric. For example, a non-conductive material, such as a segment portion of a side (e.g., a non-conductive portion 371 and a non-conductive portion 372 to be described later) may be disposed in the space corresponding to the slot region 260. When viewed in a direction of viewing the display 210 of the electronic device 101 (e.g., a (+)z-axis direction), the first slot portion region 261 may be formed on one plane (e.g., a xy-plane). For example, the first slot portion region 261 may be formed to penetrate one surface of the bridge portion 277 in a direction in which a display region of the display 210 faces. In other words, in the direction from the top side of the electronic device 101 toward the interior of the housing (or from the second slot portion region 262 toward the interior of the housing), the first slot portion region 261 may be formed.

FIG. 2B illustrates a second slot portion region of a slot region of an electronic device according to an embodiment of the disclosure. The same reference number may be referenced for the same description between drawings. The slot region 260 means a space corresponding to a slot formed within the electronic device, and a portion among the slots may be referred to as the first slot portion region. In FIG. 2B, when viewed the electronic device 101 from above (e.g., when viewed in a (-)y-axis direction) in FIG. 2A, the second slot portion region formed on one surface of the electronic device 101 is illustrated.

Referring to FIG. 2B, one surface 270 of the conductive portion 230 of the metal frame 220 may include the second slot portion region 262. For example, the one surface 270 of the conductive portion 230 may correspond to a side (e.g., an xz-plane) of a display region of the display 210. The second slot portion region 262 may include the opening formed on the one surface 270 of the conductive portion 230. Depending on the implementation, a non-conductive material (e.g., injection molded material) may be disposed in the opening. According to an embodiment of the disclosure, the metal frame 220 may include the slot region 260 in which a hole is formed in a three-dimensional space. The slot region 260 may include the first slot portion region 261 corresponding to the opening formed in one plane and the second slot portion region 262 corresponding to the opening formed in other one plane. For example, the second slot portion region 262 may be formed to penetrate the one surface 270 of the conductive portion 230 in a direction toward a side of the display region of the display 210. In other words, the second slot portion region 262 may be formed in a direction from the rear side of the housing toward the front side.

Referring to a portion 222b of the conductive portion 230, the second slot portion region 262 may be formed on one surface 270 of the conductive portion 230. The second slot portion region 262 may include an opening formed from an edge of the one surface 270 of the conductive portion 230. Depending on the implementation, a non-conductive material (e.g., injection molded material) may be disposed in the opening (the slot region 260). The second slot portion region 262 may extend from an end of the first slot portion region 261. For example, the second slot portion region 262 may be formed continuously from the first slot portion region 261 formed up to the edge of the one surface 270 of the conductive portion 230 on the xy-plane. As an example, in case that an effective slot length of the slot region 260 is L (e.g., L is about 12 millimeter (mm)) and a length of the first slot portion region 261 is M (e.g., M is about 5 mm), the second slot portion region 262 may have a shape extending by a length N (=L-M) (e.g., N is about 7 mm) from the end of the first slot portion region 261.

The slot region 260 including the first slot portion region 261 of FIG. 2A and the second slot portion region 262 of FIG. 2B may operate as a radiator of a slot antenna. The slot antenna is an antenna that utilizes the principle that electromagnetic waves are radiated through current distributed around the slot, based on a signal fed to one side of a slot of a substrate formed of metal material. For example, to function as slot antenna, at least one metal side forms a slot region 260. The slot may have a width and a length. In case that a slot is implemented within a single plane, it may be difficult to secure space according to a required width and a required length within the single plane. According to an embodiment of the disclosure, the slot region 260 may have a slot portion region (e.g., the first slot portion region 261) formed in a direction corresponding to the width of the electronic device 101 (e.g., a direction within the xy-plane), as well as a slot portion region (e.g., the second slot portion region 262) formed to have a certain height in a direction corresponding to the thickness of the electronic device 101 (e.g., a z-axis direction). As a 3D-shaped slot is formed in the conductive portion 230 and the bridge portion 277 of the metal frame 220, which connects between the conductive portion 230 and the support portion 240, antenna integration may be increased. For example, the 3D-shaped slot may include slot regions having a plurality of penetration directions with respect to the metal frame 220. The electronic device 101 may radiate a signal on a designated frequency band (e.g., a frequency band of UWB channel 5 and a frequency band of UWB channel 9) based on the slot region 260 through a wireless communication circuit.

According to embodiments of the disclosure, the structure including the 3D-shaped slot can be applied to the electronic device 101 regardless of the form factor of the electronic device 101, such as bar-type, foldable-type, or rollable-type. If the electronic device 101 has a thickness of a certain amount or more in a specific direction (e.g., z-axis), the structure can be applied. The electronic device 101 having the above structure may include non-conductive portions including surfaces disposed on two different planes (e.g., xy-plane and xz-plane). For example, the electronic device 101 includes a first non-conductive portion (e.g., a portion of the injection molded product disposed in the second slot portion region 262) exposed through one side (e.g., top surface) of the electronic device 101 and may include a second non-conductive portion (e.g., another portion of the injection-molded product disposed in the first slot portion region 261) extending toward inside from the first non-conductive portion.

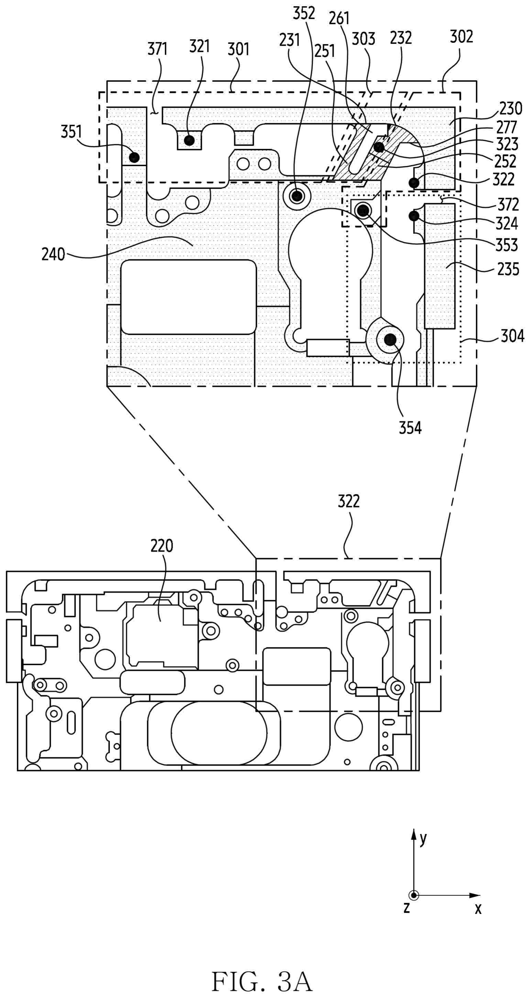

FIG. 3A illustrates a metal frame of an electronic device according to an embodiment of the disclosure. A same reference number may be referenced for a same description between drawings. The electronic device 101 may transmit a signal through a slot antenna that utilizes a slot region as a radiator, as described in FIGS. 2A and 2B. The electronic device 101 may use various types of antennas (e.g., an inverted F antenna (IFA) type antenna) in addition to the slot antenna through the metal frame 220.

Referring to FIG. 3A, the electronic device 101 may include the metal frame 220. Referring to a portion 312 of the metal frame 220, the electronic device 101 may include a plurality of conductive portions. For example, the electronic device 101 may include a conductive portion 230 and/or a conductive portion 235. The electronic device 101 may include a plurality of non-conductive portions. For example, the electronic device 101 may include a non-conductive portion 371 and/or a non-conductive portion 372. The non-conductive portion 371 and/or the non-conductive portion 372 may be referred to as a segment portion. In addition, the electronic device 101 may include a non-conductive portion in a slot region 260, which will be described later. The electronic device 101 may include a bridge portion 277. The bridge portion 277 may include a first connection portion 251 and a second connection portion 252. A first slot portion region 261 may be formed between the first connection portion 251 and the second connection portion 252. The first connection portion 251 may be coupled to a first region 231 of the conductive portion 230 and the support portion 240. The second connection portion 252 may be coupled to a second region 232 of the conductive portion 230 and the support portion 240.

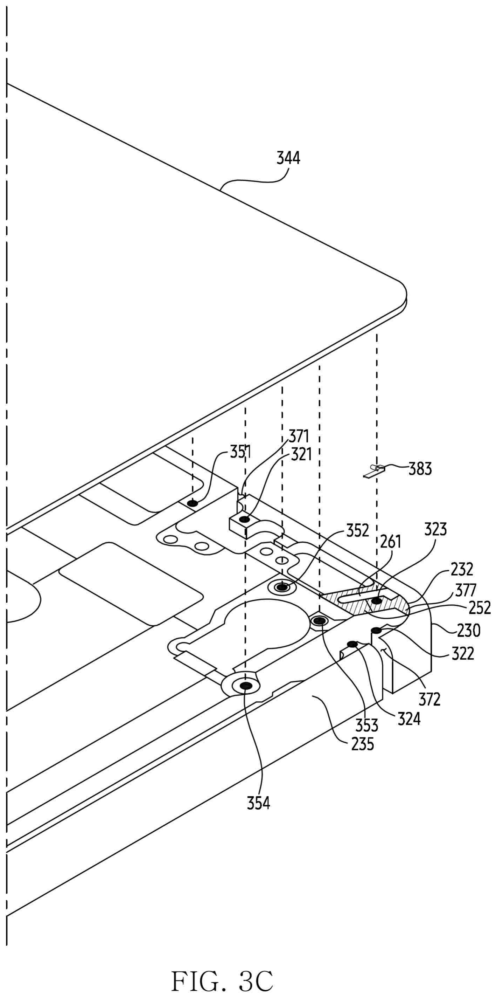

According to an embodiment of the disclosure, the electronic device 101 may include a plurality of feeding portions. For example, the electronic device 101 may include a first feeding portion 321, a second feeding portion 322, a third feeding portion 323, and/or a fourth feeding portion 324. The electronic device 101 may include a plurality of ground portions. For example, the electronic device 101 may include a first critical contact point (CCP) 351, a second CCP 352, a third CCP 353, and/or a fourth CCP 354. In the first CCP 351, the second CCP 352, the third CCP 353, and/or the fourth CCP 354, a PCB (e.g., a PCB 344 of FIG. 3C to be described later) and a bracket of the support portion 240 may be electrically connected through a C-clip.

According to an embodiment of the disclosure, the electronic device 101 may transmit a first signal on a first frequency band through a first antenna 301. The electronic device 101 may use a metal portion from one end of the conductive portion 230 to the first region 231 as a radiator of the first antenna 301. The one end of the conductive portion 230 may be a portion adjacent to the non-conductive portion 371. The first feeding portion 321 may be located between the one end of the conductive portion 230 and the first region 231. As the first signal on the first frequency band is provided to the first feeding portion 321, the first signal may be radiated. A ground of a PCB 344 may be electrically connected to a ground of the support portion 240 through the first CCP 351, the second CCP 352, the third CCP 353, and/or the fourth CCP 354. For example, a ground for the first antenna 301 may be used as a ground, by connecting to the first CCP 351, the second CCP 352, and/or the third CCP 353 adjacent to the first feeding portion 321 and the radiator (e.g., the metal portion from one end of the conductive portion 230 to the first region 231). For example, the first frequency band may include a frequency band of approximately higher than or equal to 1 gigahertz (GHz). For example, the first frequency band may include a global positioning system (GPS) L1 band (e.g., a center frequency of approximately 1575.42 megahertz (MHz)). For example, the first frequency band may include a mid-band (MB) (e.g., approximately higher than or equal to 1 GHz and less than 2.3 GHz) and/or a high-band (HB) band (e.g., approximately higher than or equal to 2.3 GHz). For example, the first frequency band may include an n77 band (e.g., greater than or equal to 3300 MHz and less than 4200 MHz).

According to an embodiment of the disclosure, the electronic device 101 may transmit a second signal on a second frequency band through a second antenna 302. The electronic device 101 may use a metal portion from one end of the conductive portion 230 to the second region 232 as a radiator of the second antenna 302. The one end of the conductive portion 230 may be a portion adjacent to the non-conductive portion 372. The second feeding portion 322 may be located between the one end of the conductive portion 230 and the second region 232. As the second signal on the second frequency band is provided to the second feeding portion 322, the second signal may be radiated. For example, the second frequency band may include an n79 band (e.g., greater than or equal to 4400 MHz and less than 5000 MHz).

According to an embodiment of the disclosure, the electronic device 101 may transmit a third signal on a third frequency band through a third antenna 303. The electronic device 101 may use the slot region 260 including a first slot portion region 261 and a second slot portion region 262 of the conductive portion 230 as a radiator of the third antenna 303. For example, since the third antenna 303 uses the slot region 260 of the bridge portion 277, the third antenna 303 may be referred to as a three-dimensional slot antenna. The third feeding portion 323 may be located on one side of the slot region 260 (e.g., one surface of the second connection portion 252). As the third signal on the third frequency band is provided to the third feeding portion 323, a potential difference may occur around the slot region 260. The third signal may be radiated based on resonance formed on the slot region 260. For example, the third frequency band may include channel 5 of an UWB frequency band (e.g., the center frequency of approximately 6489.6 MHz and a bandwidth of approximately 499.2 MHz). In addition, for example, the third frequency band may include channel 9 of the UWB frequency band (e.g., the center frequency of approximately 7987.2 MHz and the bandwidth of approximately 499.2 MHz).

According to an embodiment of the disclosure, the electronic device 101 may transmit a fourth signal on a fourth frequency band through a fourth antenna 304. The electronic device 101 may use a metal portion of the conductive portion 235 as a radiator of the fourth antenna 304. One end of the conductive portion 235 may be adjacent to the non-conductive portion 372. The non-conductive portion 372 may be formed between the conductive portion 230 and the conductive portion 235. The fourth feeding portion 324 may be located in one region of the conductive portion 235. As the fourth signal on the fourth frequency band is provided to the fourth feeding portion 324, the fourth signal may be radiated. For example, the fourth frequency band may include a wireless local area network (WLAN) band (e.g., a 2.4 GHz band, a 5 GHz band, and a 6 GHz band).

According to an embodiment of the disclosure, in order to transmit the third signal on the third frequency band, the slot region 260 may be formed in the bridge portion. As the slot region 260 is formed in the bridge portion 277, isolation between the first antenna 301 and the second antenna 302 may be improved. The first signal may be transmitted from the first feeding portion 321 to the first connection portion 251. The second signal may be transmitted from the second feeding portion 322 to the second connection portion 252. Isolation performance for the first signal and the second signal may be improved by the slot region 260 disposed between the first connection portion 251 and the second connection portion 252. For example, due to the first slot portion region 261 of the slot region 260, the bridge portion 277 is physically divided into the first connection portion 251 and the second connection portion 252, respectively, so radiation current for the first antenna 301 and radiation current for the second antenna 302 may each flow along an independent path. Through this, isolation between the first antenna 301 and the second antenna 302 may be improved. Through the first slot portion region 261, the slot region 260 may be used as a radiator of the third antenna 303 through a feeding portion (e.g., the third feeding portion 323) as well as improving the isolation. Instead of utilizing an additional structure (e.g., steel use stainless (SUS) and laser direct structuring (LDS) pattern) as a radiator, spatial integration within the electronic device 101 may be increased by using the slot region 260 of the bridge portion.

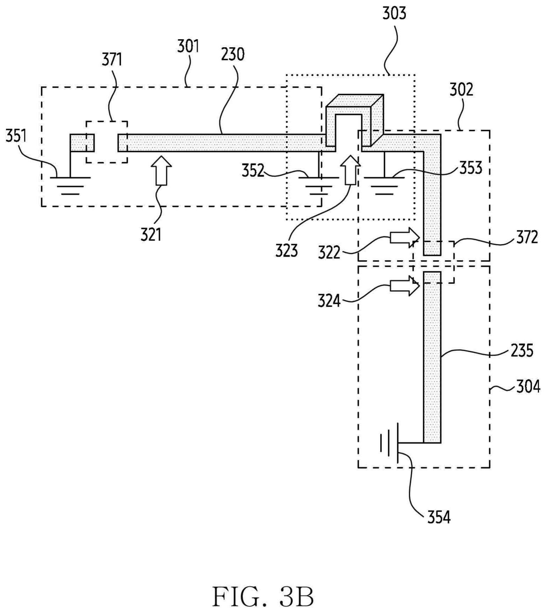

FIG. 3B illustrates an antenna circuit using a metal frame of an electronic device according to an embodiment of the disclosure. The same reference number may be referenced for the same description between drawings. In FIG. 3B, an antenna circuit for antennas described in FIG. 3A will be described.

Referring to FIG. 3B, the electronic device 101 may include four antennas within a portion (e.g., a portion 312). For example, the four antennas may include the first antenna 301, the second antenna 302, the third antenna 303, and the fourth antenna 304 of FIG. 3A. For example, the electronic device 101 may transmit a first signal on a first frequency band through the first antenna 301. The first antenna 301 may comprise an inverted F antenna (IFA) type antenna formed of one region 391 of the conductive portion 230 adjacent to the first non-conductive portion 371, a first feeding portion 321, and a second CCP 352. As the first feeding portion 321 is disposed between one end of the conductive portion 230 adjacent to the first non-conductive portion 371 and the second CCP 352 of a ground, the one region 391 of the conductive portion 230 may operate as a radiator of the IFA type antenna. For example, the electronic device 101 may transmit a second signal on the second frequency band through the second antenna 302. The second antenna 302 may include an IFA type antenna formed of one region 392 of the conductive portion 230 adjacent to the second non-conductive portion 372, a second feeding portion 322, and a third CCP 353. As the second feeding portion 322 is disposed between one end of the conductive portion 230 adjacent to the second non-conductive portion 372 and the third CCP 353 of the ground, the one region 392 of the conductive portion 230 may operate as a radiator of the IFA type antenna. For example, the electronic device 101 may transmit a third signal on a third frequency band through the third antenna 303. The third antenna 303 may include a slot antenna according to a slot structure. The slot structure may include the first connection portion 251, the second connection portion 252, and the slot region 260. The slot region 260 may operate as a radiator of the slot antenna. For example, the electronic device 101 may transmit a fourth signal on a fourth frequency band through the fourth antenna 304. The fourth antenna 304 may include an IFA type antenna formed of the conductive portion 235 formed adjacent to the second non-conductive portion 372, the fourth feeding portion 324, and the fourth CCP 354. As the fourth feeding portion 324 is disposed between one end of the conductive portion 235 adjacent to the second non-conductive portion 372 and the fourth CCP 354 of the ground, one region 394 of the conductive portion 235 may operate as a radiator of the IFA type antenna.

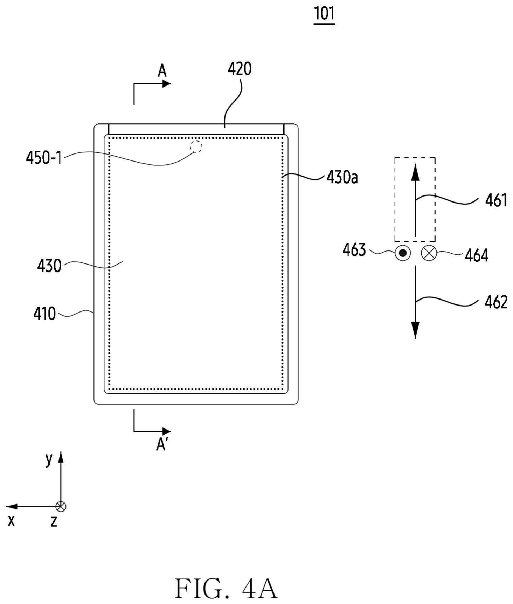

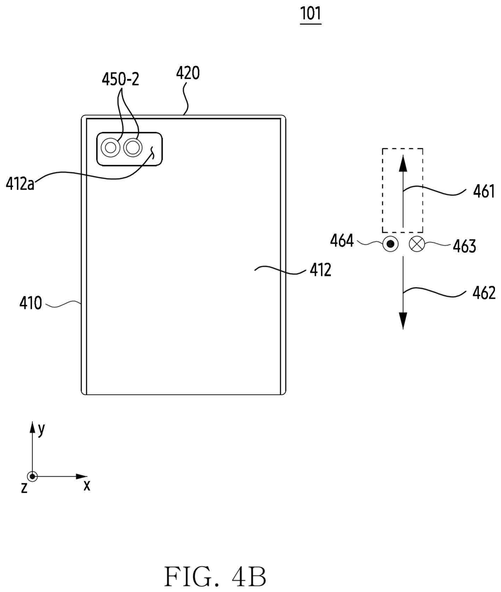

According to an embodiment of the disclosure, a display (e.g., the display 210) included in the display module 160 may be flexible. For example, the display 210 may include a display region exposed outside a housing of the electronic device 101 that provides at least a portion of an outer surface of the electronic device 101. For example, since the display 210 has flexibility, at least a portion of the display 210 may be rollable into the housing or slidable into the housing. For example, the size of the display region may change according to the size of the at least a portion of the display 210 rolled into the housing or slid into the housing. For example, the electronic device 101 including the display 210 may be within a plurality of states including a first state providing the display region having a first size and a second state providing the display region having a second size different from the first size. For example, the first state may be illustrated through the description of FIGS. 4A and 4B.

FIG. 3C illustrates an exploded perspective view for describing a connection between a metal frame and a printed circuit board (PCB) of an electronic device according to an embodiment of the disclosure. The same reference number may be referenced for the same description between drawings. In FIG. 3C, a connection relationship between feeding portions and ground portions of the metal frame 220 described in FIGS. 3A and 3B and the PCB will be described.

Referring to FIG. 3C, the electronic device 101 may include the PCB 344. For example, the PCB 344 may include a substrate on which a communication module (e.g., the communication module 190) is disposed. According to an embodiment of the disclosure, the PCB 344 may include a first wireless communication circuit for the first antenna 301. The first wireless communication circuit may provide a signal to the first antenna 301 through the first feeding portion 321. The PCB 344 may be electrically connected to the first feeding portion 321. For example, the PCB 344 and the first feeding portion 321 may be electrically connected by contacting a portion region of the PCB 344 with the first feeding portion 321. For another example, the PCB 344 may be electrically connected to the first feeding portion 321 through a structure (e.g., a C-clip).

According to an embodiment of the disclosure, the PCB 344 may include a second wireless communication circuit for the second antenna 302. The second wireless communication circuit may provide a signal to the second antenna 302 through the second feeding portion 322. The PCB 344 may be electrically connected to the second feeding portion 322. For example, the PCB 344 and the second feeding portion 322 may be electrically connected by contacting a portion region of the PCB 344 with the second feeding portion 322. For another example, the PCB 344 may be electrically connected to the second feeding portion 322 through a structure (e.g., the C-clip).

According to an embodiment of the disclosure, the PCB 344 may include a third wireless communication circuit for the third antenna 303. The third wireless communication circuit may provide a signal to the third antenna 303 through the third feeding portion 323. The PCB 344 may be electrically connected to the third feeding portion 323. For example, the PCB 344 may be electrically connected to the third feeding portion 323 through a structure (e.g., a C-clip 383). For another example, the PCB 344 and the third feeding portion 323 may be electrically connected by contacting a portion region of the PCB 344 with the third feeding portion 323.

According to an embodiment of the disclosure, the PCB 344 may include a fourth wireless communication circuit for the fourth antenna 304. The fourth wireless communication circuit may provide a signal to the fourth antenna 304 through the fourth feeding portion 324. The PCB 344 may be electrically connected to the fourth feeding portion 324. For example, the PCB 344 and the fourth feeding portion 324 may be electrically connected by contacting a portion region of the PCB 344 with the fourth feeding portion 324. For another example, the PCB 344 may be electrically connected to the fourth feeding portion 324 through a structure (e.g., the C-clip).

According to an embodiment of the disclosure, the PCB 344 may provide a ground. Like the above-described feeding portions (e.g., the first feeding portion 321, the second feeding portion 322, the third feeding portion 323, and/or the fourth feeding portion 324), ground portions (e.g., the first CCP 351, the second CCP 352, the third CCP 353, and/or the fourth CCP 354) may also be electrically connected to the PCB 344 to provide a ground. For example, in at least one CCP among the first CCP 351, the second CCP 352, the third CCP 353, and the fourth CCP 354, the support portion 240 and the PCB 344 may be in contact. In addition, for example, in at least one CCP among the first CCP 351, the second CCP 352, the third CCP 353, and the fourth CCP 354, the support portion 240 and the PCB 344 may be electrically connected through a structure (e.g., the C-clip). As a portion region of the PCB 344 in the at least one CCP is electrically connected to the support portion 240, a ground for an antenna including the metal frame 220 or the first slot portion region 261 of the slot region 260 may be provided.

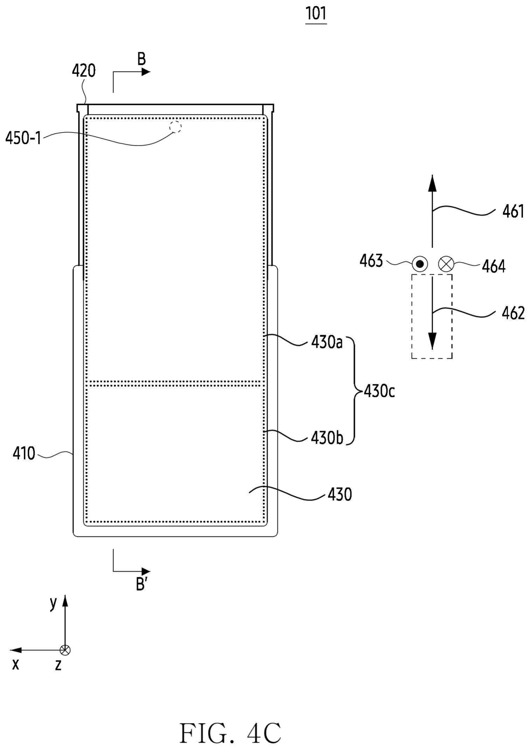

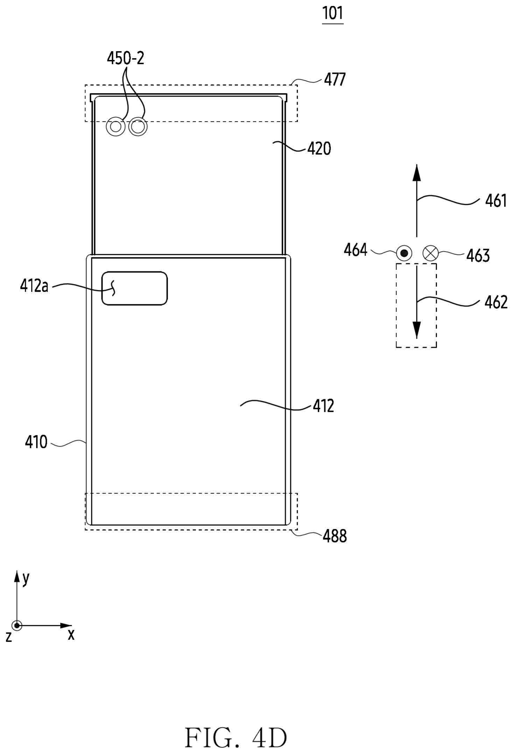

FIGS. 4A, 4B, 4C, and 4D illustrate states of an electronic device including a movable housing according to various embodiments of the disclosure. The same reference number may be referenced for the same description between drawings. The states of the electronic device 101 may include a first state. The electronic device may include a second state. The states of the electronic device 101 may include a state different from the first state and the second state.

FIG. 4A is a top plan view of an electronic device within a first state according to an embodiment of the disclosure.

Referring to FIG. 4A, the electronic device 101 may include a first housing 410, a second housing 420 movable with respect to the first housing 410 in a first direction 461 parallel to a y-axis or in a second direction 462 parallel to the y-axis and opposite to the first direction 461, and a display 430 (e.g., the display 210).

For example, the electronic device 101 may be within the first state. For example, within the first state, the second housing 420 may be movable with respect to the first housing 410 in the first direction 461 among the first direction 461 and the second direction 462. For example, within the first state, the second housing 420 may be restricted in movement in the second direction 462 with respect to the first housing 410. As an example, the second housing 420 may be difficult to move any further in the second direction 462 with respect to the first housing 410. As another example, the second housing 420 may not be easy to move due to being caught in the second direction 462 with respect to the first housing 410.

For example, within the first state, the display 430 may provide a display region having the smallest size. For example, within the first state, the display region may correspond to a region 430a. For example, although not illustrated in FIG. 4A, within the first state, a region of the display 430 (e.g., a region 430b of FIG. 4C) different from the region 430a, which is the display region, may be included within the first housing 410. For example, within the first state, the region may be covered by the first housing 410. For example, within the first state, the region may be rolled into the first housing 410. For example, within the first state, the region 430a may include a planar portion, unlike the region including a curved portion. However, it is not limited thereto. For example, the region 430a may, within the first state, include a curved portion that extends from the planar portion and located within an edge portion.

For example, the first state may be referred to as a slide-in state or a closed state in terms of at least a portion of the second housing 420 being located within the first housing 410. For example, the first state may be referred to as a reduced state in terms of providing the display region having the smallest size. However, it is not limited thereto.

For example, the first housing 410 may include a first image sensor 450-1 within a camera module 180, visually exposed through a portion of the region 430a and facing a third direction 463 parallel to a z-axis. For example, the camera module 180 may be disposed to perform its function without being visually exposed through a portion of the region 430a in an internal space of the electronic device. For example, although not illustrated in FIG. 4A, the second housing 420 may include one or more second image sensors within the camera module 180, exposed through a portion of the second housing 420 and facing a fourth direction 464 parallel to the z-axis and opposite to the third direction 463. For example, the one or more second image sensors may be illustrated in the description of FIG. 4B.

FIG. 4B is a rear view of an electronic device within a first state according to an embodiment of the disclosure.

Referring to FIG. 4B, within the first state, one or more second image sensors 450-2 disposed within the second housing 420 may be located within a structure disposed within the first housing 410 for the one or more second image sensors 450-2. For example, light from outside of the electronic device 101 may, within the first state, be received by the one or more second image sensors 450-2 through the structure. For example, since the one or more second image sensors 450-2 are located within the structure within the first state, the one or more second image sensors 450-2 may be exposed through the structure within the first state. For example, the structure may be implemented in various ways. For example, the structure may be an opening or a notch. For example, the structure may be an opening 412a within a plate 412 of the first housing 410 that surrounds at least a portion of the second housing 420. However, it is not limited thereto. For example, within the first state, the one or more second image sensors 450-2 included within the second housing 420 may be covered by the plate 412 of the first housing 410.

Referring again to FIG. 4A, the first state may be changed to the second state.

For example, the first state (or the second state) may be changed to the second state (or the first state) through one or more intermediate states between the first state and the second state.

For example, the first state (or the second state) may be changed to the second state (or the first state) based on an user input. For example, the first state (or the second state) may be changed to the second state (or the first state) in response to a user input to a physical button exposed through a portion of the first housing 410 or a portion of the second housing 420. For example, the first state (or the second state) may be changed to the second state (or the first state) in response to a touch input on an executable object displayed within the display region. For example, the first state (or the second state) may be changed to the second state (or the first state) in response to a touch input having a contact point on the display region and having a pressing intensity greater than or equal to a reference intensity. For example, the first state (or the second state) may be changed to the second state (or the first state) in response to a voice input received through a microphone of the electronic device 101. For example, the first state (or the second state) may be changed to the second state (or the first state) in response to a force applied to the first housing 410 and/or the second housing 420 to move the second housing 420 with respect to the first housing 410. For example, the first state (or the second state) may be changed to the second state (or the first state) in response to a user input identified by an external electronic device (e.g., earbuds or smart watch) connected to the electronic device 101. However, it is not limited thereto.

The second state may be illustrated in the description of FIGS. 4C and 4D.

FIG. 4C is a top plan view of an electronic device within a second state according to an embodiment of the disclosure.

Referring to FIG. 4C, the electronic device 101 may be within the second state. For example, within the second state, the second housing 420 may be movable with respect to the first housing 410 in the second direction 462 among the first direction 461 and the second direction 462. For example, within the second state, the second housing 420 may not be movable in the first direction 461 with respect to the first housing 410.

For example, within the second state, the display 430 may provide the display region having the largest size. For example, within the second state, the display region may correspond to a region 430c including the region 430a and the region 430b. For example, the region 430b that was included within the first housing 410 within the first state may be exposed within the second state. For example, within the second state, the region 430a may include a planar portion. However, it is not limited thereto. For example, the region 430a may include a curved portion extending from the planar portion and located within an edge portion. For example, within the second state, the region 430b may include the planar portion among the planar portion and the curved portion, unlike the region 430a within the first state. However, it is not limited thereto. For example, the region 430b may include the curved portion extending from the planar portion of the region 430b and located within the edge portion.

For example, the second state may be referred to as a slide-out state or an open state in terms of at least a portion of the second housing 420 being located outside the first housing 410. For example, the second state may be referred to as an extended state in terms of providing the display region having the largest size. However, it is not limited thereto.

For example, the first image sensor 450-1 facing the third direction 463 may be moved with the region 430a according to the movement of the second housing 420 toward the first direction 461, when the state of the electronic device 101 changes from the first state to the second state. For example, although not illustrated within FIG. 4C, the one or more second image sensors 450-2 facing the fourth direction 464 may be moved according to the movement of the second housing 420 toward the first direction 461, when the state of the electronic device 101 changes from the first state to the second state. For example, a relative location relationship between the one or more second image sensors 450-2 and the structure may be changed according to the movement of the one or more second image sensors 450-2. For example, the change in the relative location relationship may be illustrated in FIG. 4D.

FIG. 4D is a rear view of an electronic device within a second state according to an embodiment of the disclosure.

Referring to FIG. 4D, within the second state, the one or more second image sensors 450-2 may be located outside the structure. For example, within the second state, the one or more second image sensors 450-2 may be located outside the opening 412a within the plate 412. For example, since the one or more second image sensors 450-2 are located outside the opening 412a within the second state, the one or more second image sensors 450-2 may be exposed within the second state. For example, since the one or more second image sensors 450-2 are located outside the structure within the second state, the relative location relationship within the second state may be different from the relative location relationship within the first state.

For example, in case that the electronic device 101 does not include the structure, such as the opening 412a, the one or more second image sensors 450-2 within the second state may be exposed, unlike the one or more second image sensors 450-2 within the first state.

Although not illustrated in FIGS. 4A, 4B, 4C, and 4D, the electronic device 101 may be in an intermediate state between the first state and the second state. For example, the size of the display region within the intermediate state may be larger than the size of the display region within the first state and smaller than the size of the display region within the second state. For example, the display region within the intermediate state may correspond to a region including the region 430a and a portion of the region 430b. For example, within the intermediate state, the portion of the region 430b may be exposed, and another portion (or a remaining portion) of the region 430b may be covered by the first housing 410 or rolled into the first housing 410. However, it is not limited thereto.

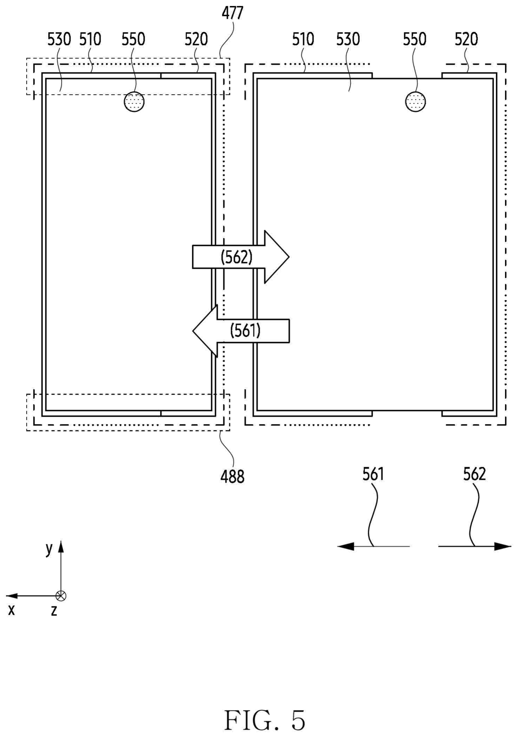

FIG. 5 illustrates an electronic device including a movable housing according to an embodiment of the disclosure. The same reference number may be referenced for the same description between drawings. In FIG. 5, an example of moving in a direction (e.g., a (+)x-axis, a (-)x-axis) different from a moving direction (e.g., a (+)y-axis, a (-)y-axis) of the second housing 420 in FIGS. 4A to 4D will be described.

Referring to FIG. 5, the electronic device 101 may include a first housing 510, a second housing 520 movable with respect to the first housing 510 in a first direction 561 parallel to the x-axis or a second direction 562 parallel to the x-axis and opposite to the first direction 561, and a display 530 (e.g., the display 210).

The electronic device 101 may be within the first state. For example, within the first state, the second housing 520 may be movable with respect to the first housing 510 in the second direction 562 among the first direction 561 and the second direction 562. For example, within the first state, the second housing 520 may not be movable in the first direction 561 with respect to the first housing 510. For example, within the first state, the display 530 may provide a display region having the smallest size. For example, the first state may be referred to as a slide-in state or a closed state in terms of at least a portion of the second housing 520 being located within the first housing 510. For example, the first state may be referred to as a reduced state in terms of providing the display region having the smallest size. However, it is not limited thereto. For example, although not illustrated within FIG. 5, the first housing 510 may include an image sensor (not illustrated). For example, the second housing 520 may be exposed through a portion of the second housing 520 and may include one or more image sensors 550 within the camera module 180.

The second housing 520 may be drawn out from the first housing 510. Based on the second housing 520 being drawn out from the first housing 510, a state of the electronic device 101 may be changed from the first state to the second state. In addition, the second housing 520 may be inserted into the first housing 510. Based on the second housing 520 being inserted from the first housing 510, the state of the electronic device 101 may be changed from the second state to the first state.

The electronic device 101 may be within the second state. For example, within the second state, the second housing 520 may be movable with respect to the first housing 510 in the first direction 561 among the first direction 561 and the second direction 562. For example, within the second state, the second housing 520 may not be movable in the second direction 562 with respect to the first housing 510. For example, within the second state, the display 530 may provide a display region having the largest size. For example, the second state may be referred to as a slide-out state or an open state in terms of at least a portion of the second housing 520 being located outside the first housing 510. For example, the second state may be referred to as an extended state in terms of providing the display region having the largest size. However, it is not limited thereto.

Hereinafter, operations of the electronic device 101 including the second housing 420 moving in the direction (e.g., the (+)y-axis, (-)y-axis) in FIGS. 4A to 4D will be described, but embodiments of the disclosure are not limited thereto. The embodiments of the disclosure may also be applied to the electronic device 101 including the second housing 520 moving in the direction (e.g., (+)x-axis, (-)x-axis) in FIG. 5. According to embodiments described later, conductive portions and non-conductive portions of a metal frame of the electronic device 101 may be disposed in a first region 477 or a second region 488 of the electronic device 101. In addition, according to the embodiments described later, a support portion, a bridge portion, and a slot region formed across the bridge portion and the conductive portion of the electronic device 101 may be disposed in the first region 477 of the electronic device 101.

In addition, for the embodiments of the disclosure, there is no limit to structural changes due to expansion or reduction in the horizontal or vertical direction, and a radiator structure including the bridge portion and the slot region according to the embodiments described later may also be applied to a bar-type or foldable electronic device.

A slot antenna according to the embodiments of the disclosure may be formed based on the bridge portion 277 of the metal frame 220. Due to the bridge portion 277, the slot antenna may secure isolation from antennas (e.g., the first antenna 301 and the second antenna 302) adjacent to the slot antenna. In addition, in order to design an antenna for a transmission of a signal on a UWB frequency band (e.g., channel 5 or channel 9), a slot having a length of about 10mm or more may be required. The electronic device 101 having the above-described rollable form factor may not have enough space to form a slot along the metal frame 220 due to the mounting of electronic components (e.g., a camera, a speaker, a motor, a USB, a communication module, or a chip on plastic (COP)) within the second housing 420. The embodiments of the disclosure may include a slot region (e.g., the slot region 260) having a three-dimensional shape. The slot region 260 may include a slot portion region (e.g., a first slot portion region 261) penetrating one surface and a slot portion region (e.g., a second slot portion region 262) penetrating other one surface. For example, a slot region having a width of about 1 mm or more and a length of about 12 mm may be required according to a frequency band. The slot region may include the first slot portion region 261 and the second slot portion region 262. For example, the first slot portion region 261 having a width of about 1 mm and a length of about 5 mm may be formed on the one surface (e.g., the xy-plane). For example, the second slot portion region 262 having a width of about 1.5 mm and a length of about 7 mm may be formed in the one direction (e.g., z-axis). The one surface and the other one surface may not be parallel to each other. For example, the one surface and the other one surface may be substantially perpendicular. For example, the one surface may include one surface of a bridge portion as a surface perpendicular to a direction toward the display 210. For example, the other one surface may include the one surface 270 of the conductive portion 230 as a side of the display 210. In order to secure the antenna total efficiency of the slot antenna, it is required that the physical length of the slot be sufficiently secured. Therefore, the region configured to function as the slot antenna includes a first elongated portion (e.g., the first slot portion region 261) having a first longitudinal direction toward an interior of the housing, between the first connection portion 251 of the bridge portion and the second connection portion 252 of the bridge portion 277 and a second elongated portion (e.g., the second slot portion region 262) having a second longitudinal direction at least partially from a rear side to a front side of the housing, between the first region 231 of the conductive portion 230 and the second region 232 of the conductive portion 230. The electronic device 101 may perform communication on a frequency band in accordance with a slot length. For example, the slot length may be determined as a sum of a length of the first elongated portion in the first direction and a length of the second elongated portion in the second direction.

According to an embodiment of the disclosure, as the antenna for the UWB frequency band is disposed on an upper end of the metal frame 220 (e.g., the region located in the (+)y-axis direction of FIG. 2A), radiation performance for UWB ranging may be improved. For example, an antenna, such as LB (e.g., less than about 1 GHz), MB, and/or HB antennas, and a GPS antenna where upper hemisphere isotropic sensitivity (UHIS) is important are mainly disposed at the upper end of the metal frame 220. As the slot antenna is implemented on the bridge portion 277 in the electronic device 101 as a UWB antenna in addition to the above-described antennas,, an antenna integration level of the electronic device 101 may increase.

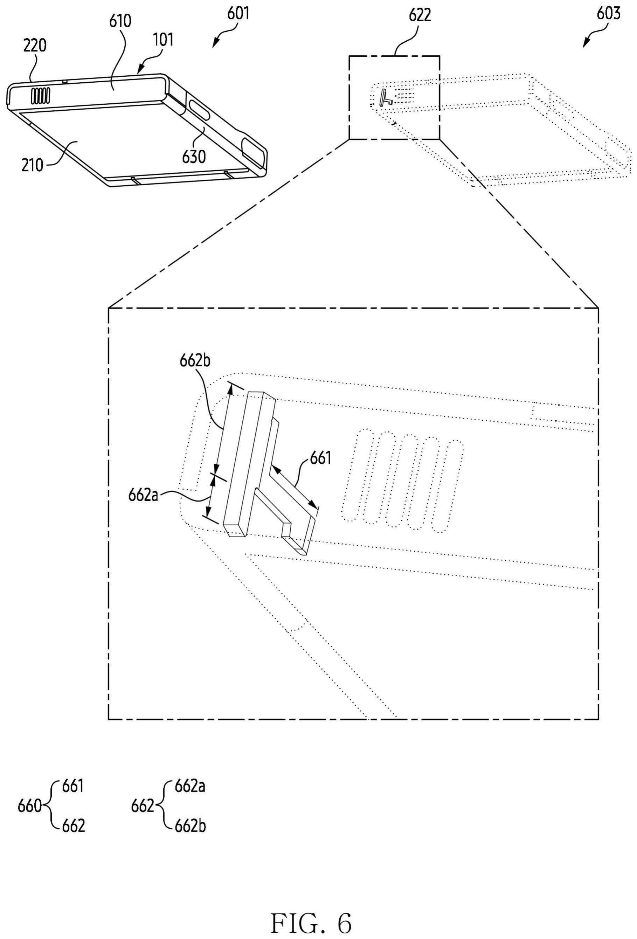

FIG. 6 illustrates an injection molded product disposed within a slot region of an electronic device according to an embodiment of the disclosure. The same reference number may be referenced for the same description between drawings. The electronic device 101 may include the slot region 260 described in FIGS. 2A, 2B, 3A, and 3B.

Referring to FIG. 6, a perspective view 601 indicates the electronic device 101. The electronic device 101 may include a first cover structure 620 and/or a second cover structure 630 including the display 210, a plate 610, and the metal frame 220. The plate 610 may be coupled to one surface of the first cover structure 620 (e.g., the one surface 270 of the conductive portion 230) for assembly and protection of the display 210. According to an embodiment of the disclosure, the electronic device 101 may include an injection molded product 660 for occupying a space of the slot region 260. The injection molded product 660 may be disposed on one surface of the plate 610.

A perspective view 603 indicates the injection molded product 660 of the electronic device 101. The injection molded product 660 may include a first injection molded portion 661 and/or a second injection molded portion 662. The first injection molded portion 661 may occupy the space of the first slot portion region 261. The second injection molded portion 662 may occupy the space of the second slot portion region 262. The first injection molded portion 661 may be disposed within one space formed through the bridge portion 277. The second injection molded portion 662 may be disposed on one surface (e.g., the one surface 270) of the conductive portion 230. As an example, referring to a portion 622, the second injection molded portion 662 may include a first region 662a formed in a first direction and a second region 662b formed in a direction different from the first direction (e.g., in an opposite direction), based on a region coupled to the first injection molded portion 661.

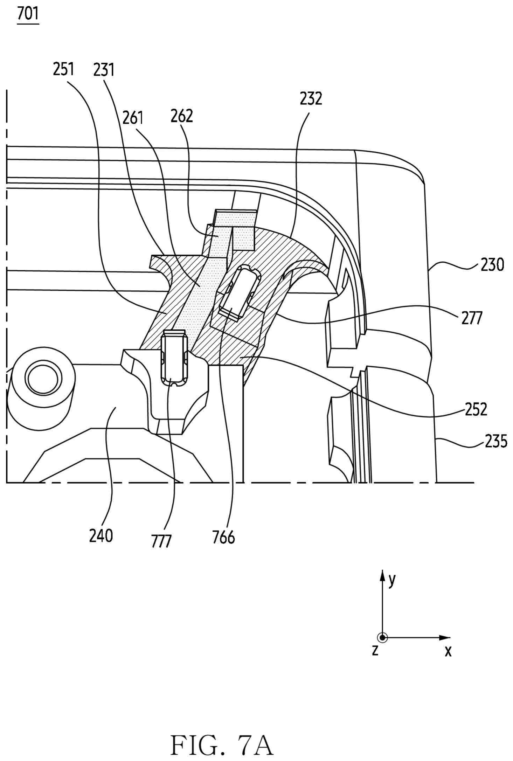

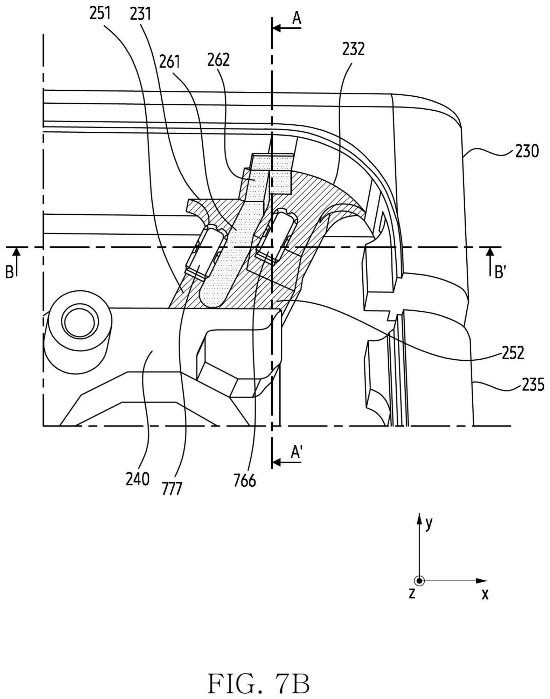

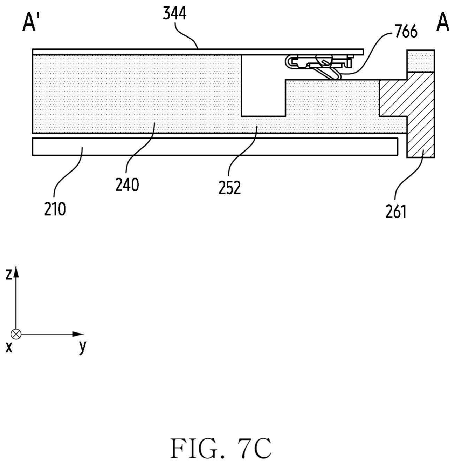

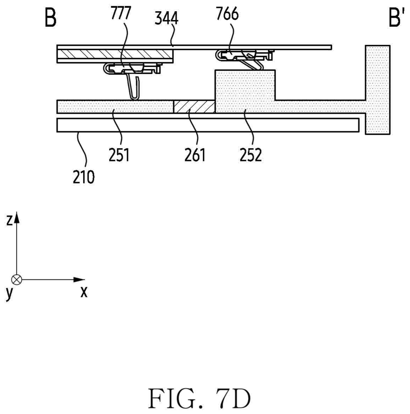

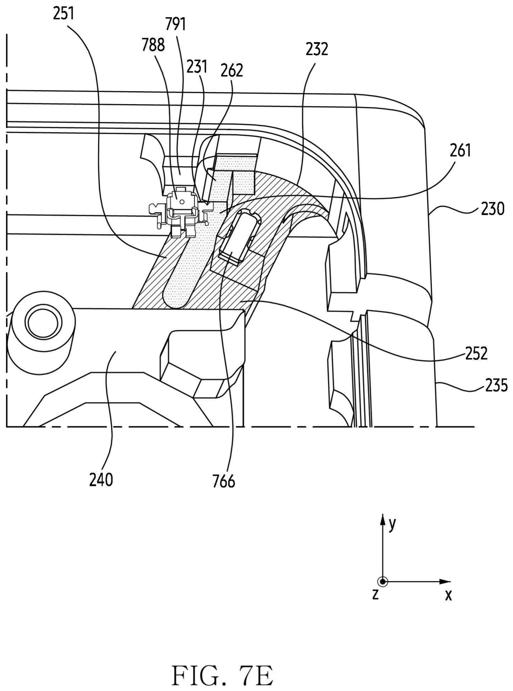

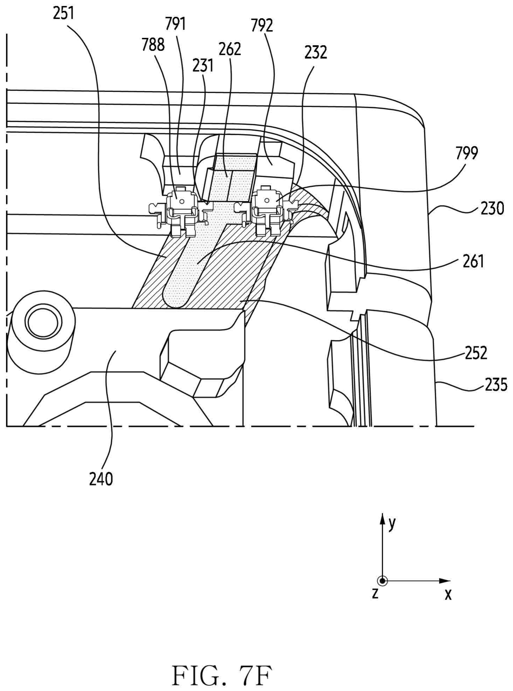

FIGS. 7A, 7B, 7C, 7D, 7E, and 7F illustrate a feeding circuit 701 for a slot region of an electronic device according to various embodiments of the disclosure. The same reference number may be referenced for the same description between drawings. In FIGS. 7A to 7F, examples of a disposition of a feeding structure and a ground structure are described for an antenna using the slot region 260.

Referring to FIG. 7A, the electronic device 101 may include a feeding structure 766 and a ground structure 777. For example, the feeding structure 766 may be disposed for contact with a substrate including a wireless communication circuit. For example, the feeding structure 766 may include a C-clip for rear contact. According to an embodiment of the disclosure, the feeding structure 766 may be disposed on one side of the slot region 260, and the ground structure 777 may be disposed on one region of the support portion 240. For example, the feeding structure 766 may be disposed on one surface (e.g., a surface facing the (+)z-axis) of the second connection portion 252. For example, since the electronic device 101 has a structure in which power is fed from a rear direction, a feeding from the feeding structure 766 may be referred to as a rear feeding. The ground structure 777 may be disposed on one surface (e.g., a surface facing the (+)z-axis) of the support portion 240. The ground structure 777 may include a CCP.

Referring to FIG. 7B, the electronic device 101 may include the feeding structure 766 and the ground structure 777. For example, the feeding structure 766 may be disposed for contact with the substrate including the wireless communication circuit. For example, the feeding structure 766 may include the C-clip for rear contact. According to an embodiment of the disclosure, the feeding structure 766 may be disposed on the one side of the slot region 260, and the ground structure 777 may be disposed on one side different from the one side of the slot region 260. For example, a feeding structure 766 may be disposed on one side based on the longitudinal direction of the slot region 260 and the ground structure 777 may be disposed on other one side. For example, the feeding structure 766 may be disposed on the one surface (e.g., the surface facing the (+)z-axis) of the second connection portion 252. The feeding of the feeding structure 766 may be referred to as the rear feeding. The ground structure 777 may be disposed on one surface (e.g., a surface facing the (+)z-axis) of the first connection portion 251. The ground structure 777 may include the CCP. A contact between the ground structure 777 and the one surface of the first connection portion 251 may be referred to as a rear contact.

Referring to FIG. 7C, a cross-sectional view is illustrated in which a structure for the slot region 260 of the electronic device 101 of FIG. 7B is cut in a A-A' direction. The support portion 240 may be disposed on the display 210. The PCB 344 may be disposed on the support portion 240. For electrical connection with the PCB 344, the second connection portion 252 of the bridge portion 277 connected to the support portion 240 may contact the feeding structure 766 (e.g., the C-clip).

Referring to FIG. 7D, a cross-sectional view is illustrated in which the structure for the slot region 260 of the electronic device 101 of FIG. 7B is cut in a B-B' direction. For example, the display 210 and the support portion 240 may be physically coupled through an adhesive layer. The first connection portion 251 and the second connection portion 252 connected to the support portion 240 may be located between the display 210 and the PCB 344. For example, the ground structure 777 (e.g., the C-clip) may be disposed between the first connection portion 251 and the PCB 344. As an example, the ground structure 777 may be electrically connected to the PCB 344 through an interposer 774. The PCB 344 and the first connection portion 251 may be electrically connected through the ground structure 777. For example, the feeding structure 766 (e.g., the C-clip) may be disposed between the second connection portion 252 and the PCB 344. The PCB 344 and the second connection portion 252 may be electrically connected through the feeding structure 766. According to an embodiment of the disclosure, the first slot portion region 261 of the slot region 260 may be formed between the first connection portion 251 and the second connection portion 252. For example, a certain gap is formed between the first slot portion region 261 and the display 210, so that the first slot portion region 261 may operate as a radiator of a slot antenna. For example, a non-conductive material may be disposed in the first slot portion region 261 of the slot region 260.

Although the interposer 774 is illustrated in FIG. 7D, according to another embodiment of the disclosure, the interposer 774 may be omitted. An electrical connection between the PCB 344 and the first connection portion 251 may be formed by directly contacting the PCB 344 and the ground structure 777.

Referring to FIG. 7E, the electronic device 101 may include the feeding structure 766 and a ground structure 788. For example, the feeding structure 766 may be disposed for contact with the substrate including the wireless communication circuit. For example, the feeding structure 766 may include the C-clip for rear contact. According to an embodiment of the disclosure, the feeding structure 766 may be disposed on the one side of the slot region 260, and the ground structure 788 may be disposed on the one side different from the one side of the slot region 260. For example, the feeding structure 766 may be disposed on the one side based on the longitudinal direction of the slot region 260 and the ground structure 788 may be disposed on the other one side. For example, the feeding structure 766 may be disposed on the one surface (e.g., the surface facing the (+)z-axis) of the second connection portion 252. The feeding of the feeding structure 766 may be referred to as the rear feeding. The conductive portion 230 may include a protrusion portion 791 facing in one direction (e.g., the (-)y-axis direction). The ground structure 788 may be disposed on one surface (e.g., a surface facing the (-)y-axis direction) of the protrusion portion 791 of the conductive portion 230. A contact method between the ground structure 788 and the protrusion portion 791 may be referred to as a side contact.

Referring to FIG. 7F, the electronic device 101 may include a feeding structure 799 and the ground structure 788. For example, the feeding structure 799 may be disposed for contact with the substrate including the wireless communication circuit. For example, the feeding structure 799 may include the C-clip for the side contact. According to an embodiment of the disclosure, the feeding structure 799 may be disposed on the one side of the slot region 260, and the ground structure 788 may be disposed on the one side different from the one side of the slot region 260. For example, the feeding structure 799 may be disposed on the one side based on the longitudinal direction of the slot region 260 and the ground structure 788 may be disposed on the other one side. For example, the conductive portion 230 may include the protrusion portion 791 and a protrusion portion 792 facing in one direction (e.g., the (-)y-axis direction). The feeding structure 799 may be disposed on one surface (e.g., a surface facing the (-)y-axis direction) of the protrusion portion 792 of the conductive portion 230. The feeding method of the feeding structure 799 and the protrusion portion 792 may be referred to as a side feeding. The ground structure 788 may be disposed on one surface (e.g., a surface facing the (-)y-axis direction) of the protrusion portion 791 of the conductive portion 230.

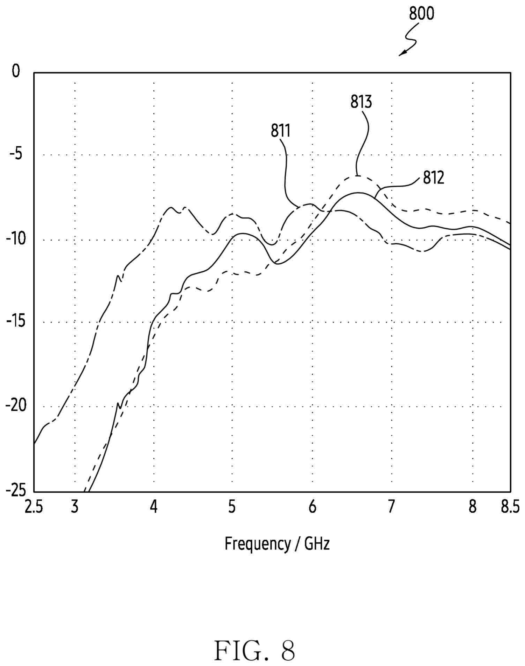

FIG. 8 illustrates an antenna performance of a slot antenna according to a feeding method of an embodiment of the disclosure. In FIG. 8, antenna performance for each of the methods of the feeding circuit described in FIGS. 7A, 7B, and 7E will be described. A disposition of the feeding circuit according to FIG. 7A may be referred to as a first method. The disposition of the feeding circuit according to FIG. 7B may be referred to as a second method. The disposition of the feeding circuit according to FIG. 7E may be referred to as a third method.

Referring to FIG. 8, a graph 800 indicates antenna total efficiency for each frequency. The horizontal axis of the graph 800 indicates a frequency (unit: GHz), and the vertical axis of the graph 800 indicates antenna total efficiency (unit: decibel (dB)). A first line 811 indicates the antenna total efficiency in the feeding circuit according to the first method. A second line 812 indicates the antenna total efficiency in the feeding circuit according to the second method. A third line 813 indicates the antenna total efficiency in the feeding circuit according to the third method.

Referring to the graph 800, radiation efficiency in the rear feeding method is illustrated for a slot antenna using the slot region 260. In addition, for the slot antenna using the slot region 260, better radiation efficiency may be provided as the degree of symmetry with respect to the location of the feeding and the location of the ground increases based on the slot region 260. For example, referring to channel 5 (e.g., a center frequency being 6489.6 MHz) of a UWB frequency band, it may be identified that the radiation efficiency is high in the order of the third method, the second method, and the first method. In addition, for example, referring to channel 9 (e.g., the center frequency being 7987.2 MHz) of the UWB frequency band, it may be identified that the radiation efficiency is high in the order of the third method, the second method, and the first method. As the feeding and the ground are disposed symmetrically based on the slot region 260, a potential difference may be formed large on an opening surface within the slot region 260. A large potential difference may cause the current to concentrate in a specific direction and provide a high gain of a radiated electromagnetic wave.

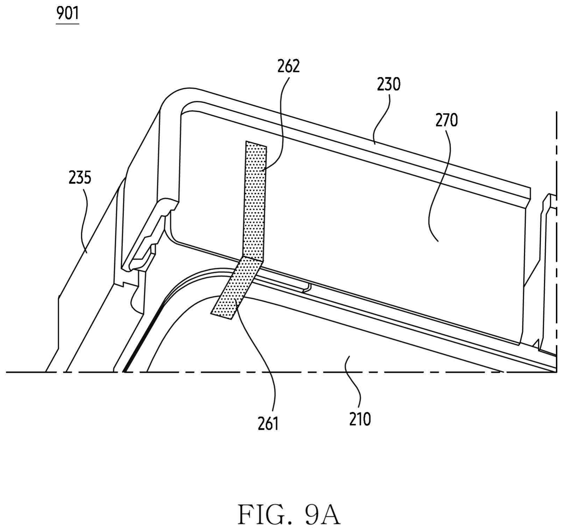

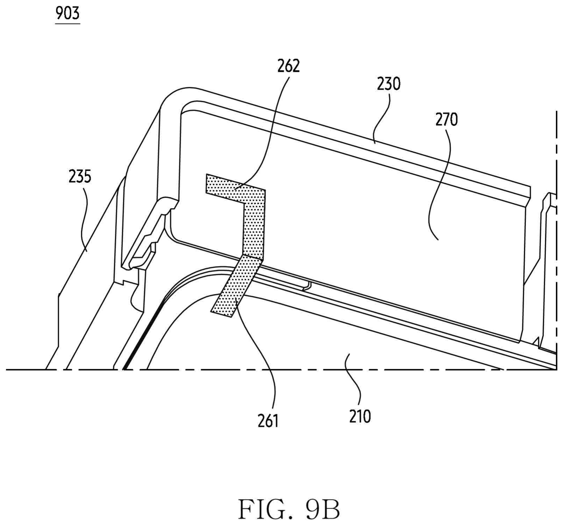

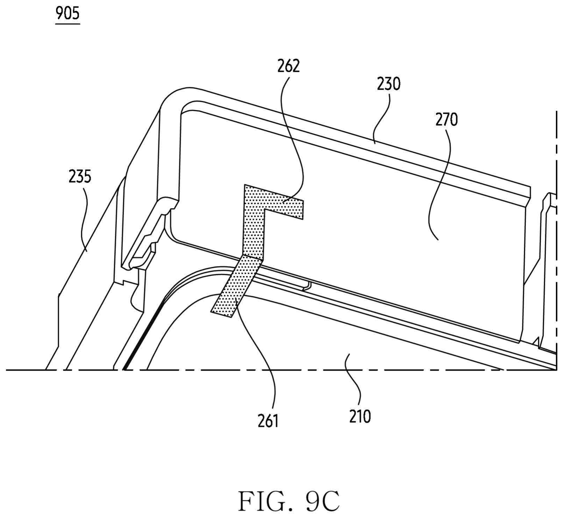

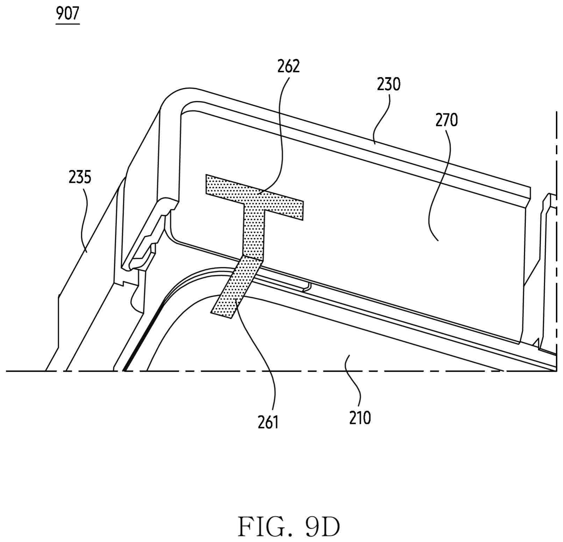

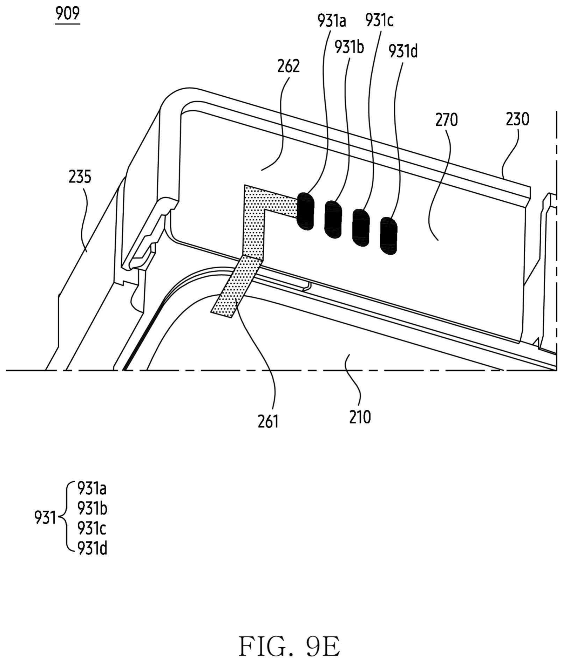

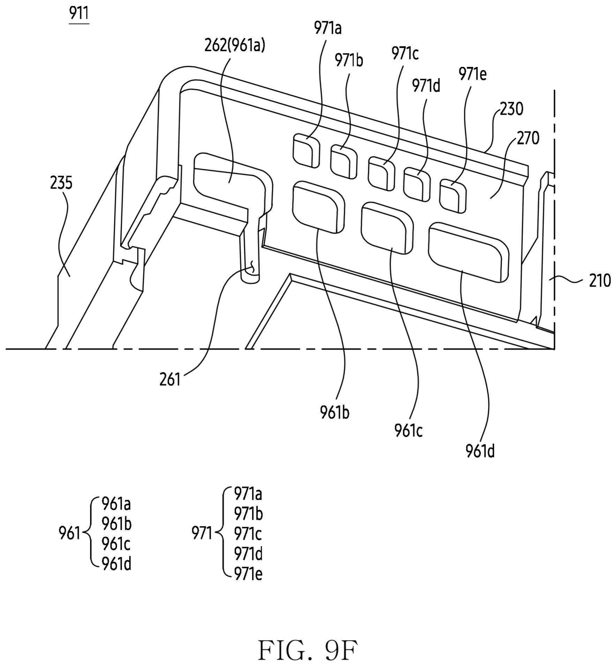

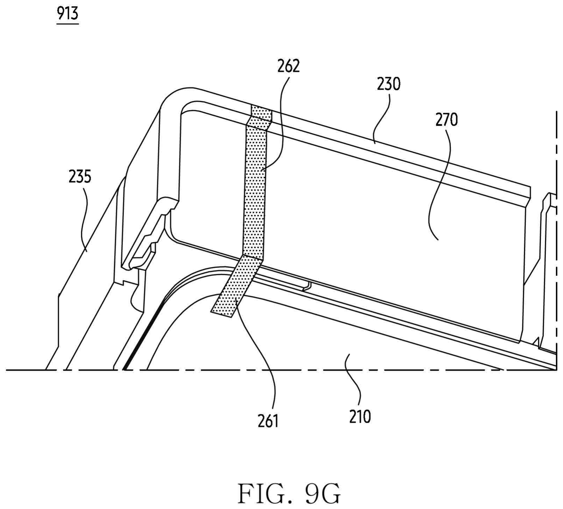

FIGS. 9A, 9B, 9C, 9D, 9E, 9F, and 9G illustrate a shape of a slot region according to various embodiments of the disclosure. The same reference number may be referenced for the same description between drawings. In the disclosure, the slot region 260 may include a region penetrated on one surface (e.g., the first slot portion region 261) and include a region penetrated on other one side (e.g., the second slot portion region 262). In case that each of the two different surfaces has a penetrated region, and the penetrated regions form one slot, the shape of the slot region 260 may vary.

Referring to FIG. 9A, in example 901, the shape of the slot region 260 may include a curved straight shape. A shape of the second slot portion region 262 may include a straight shape. As a plate (e.g., the plate 610) that is a decoration of a top surface, the plate 610 may overlap the top surface (e.g., the one surface 270 of the conductive portion 230) of the metal frame 220. Since other electrical objects are not disposed on the top surface, the degree of freedom of the second slot portion region 262 may be relatively high. Therefore, the second slot portion region 262 may have various shapes as well as the straight shape.

Referring to FIG. 9B, in example 903, the shape of the slot region 260 may include a curved '¬' shape. For example, the shape of the second slot portion region 262 may include a '¬' shape.

Referring to FIG. 9C, in example 905, the shape of the slot region 260 may include a curved ' 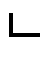 ' shape. For example, the shape of the second slot portion region 262 may include a ' 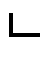 ' shape.

Referring to FIG. 9D, in example 907, the shape of the slot region 260 may include a curved 'T' shape. For example, the shape of the second slot portion region 262 may include a 'T' shape.

Referring to FIG. 9E, in example 909, at least a portion of the slot region 260 may include at least a portion of a speaker hole. The electronic device 101 may include a plurality of speaker holes 931a, 931b, 931c, and 931d for a speaker (e.g., the sound output module 155). For example, the plurality of speaker holes may include a first speaker hole 931a, a second speaker hole 931b, a third speaker hole 931c, and/or a fourth speaker hole 931d. The first speaker hole 931a, the second speaker hole 931b, the third speaker hole 931c, and/or the fourth speaker hole 931d may be formed on the one surface 270 of the conductive portion 230 of the metal frame 220. An opening of the first speaker hole 931a may be coupled to at least a portion of an opening of the second slot portion region 262 of the slot region 260. For example, the first speaker hole 931a may be at least a portion of the second slot portion region 262.

Referring to FIG. 9F, in example 911, the at least a portion of the slot region 260 may include at least a portion of a hole for a communication module (e.g., the antenna module 197). For example, the communication module may include a mmWave module. For radiation of the communication module, the electronic device 101 may include radiation holes 961a, 961b, 961c, 961d, 971a, 971b, 971c, 971d, and 971e on the one surface 270 of the conductive portion 230. For example, a plurality of radiation holes may include a first radiation hole 961a, a second radiation hole 961b, a third radiation hole 961c, and/or a fourth radiation hole 961d. The first radiation hole 961a, the second radiation hole 961b, the third radiation hole 961c, and/or the fourth radiation hole 961d may be disposed on the one surface 270 of the conductive portion 230 of the metal frame 220. An opening of the first radiation hole 961a may be coupled to the at least a portion of the opening of the second slot portion region 262 of the slot region 260. For example, the first radiation hole 961a may be at least a portion of the second slot portion region 262.

Referring to FIG. 9G, in example 913, the shape of the slot region 260 may include a curved straight shape. For example, the shape of the second slot portion region 262 may include a straight shape. Unlike the example 901, the second slot portion region 262 in the example 913 may include a straight shape extended to have an open shape by extending from one edge of the conductive portion 230 to other edge.

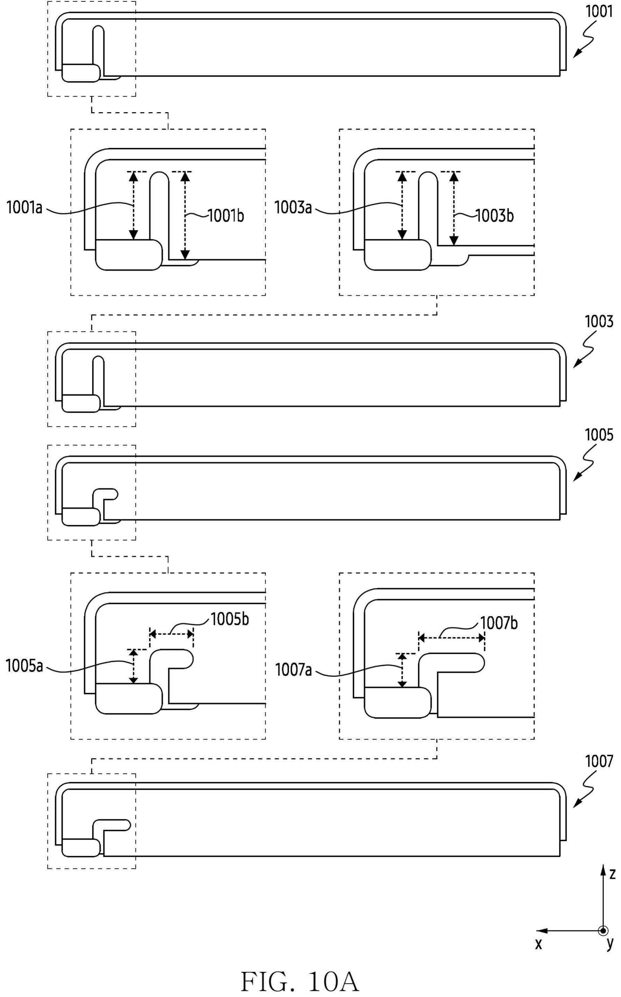

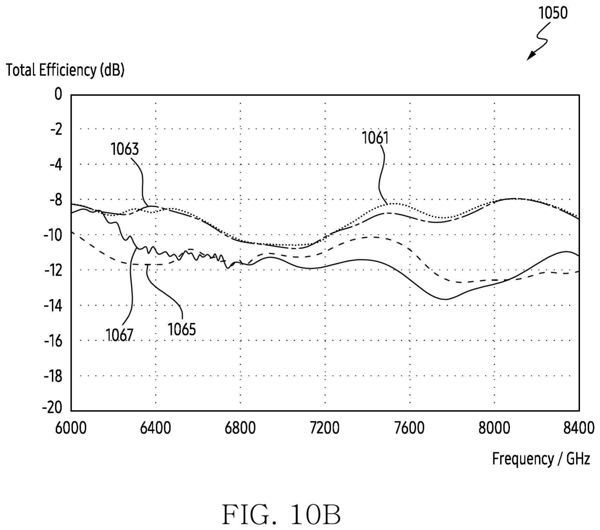

FIGS. 10A and 10B illustrate an antenna performance of a slot antenna according to a shape of a slot region according to various embodiments of the disclosure. The same reference number may be referenced for the same description between drawings. In order to describe the shape of the slot region 260 in FIG. 10A, the injection molded product 660 described in FIG. 6 will be illustrated. The slot region 260 may include the second slot portion region 262 on the one surface 270 of the conductive portion 230.

Referring to FIG. 10A, a first shape 1001 of the slot region 260 may have a length in one direction (e.g., the (+)z-axis direction) on the one surface 270 of the conductive portion 230. A third shape 1005 of the slot region 260 may include a '1' shape. The second slot portion region 262 may include a first length 1001a and a second length 1001b. The first length 1001a indicates a distance from one end of the second slot portion region 262 to the first slot portion region 261. For example, the first length 1001a may correspond to a length of the second region 662b of the second injection portion 662 of the injection molded product 660. The second length 1001b indicates a length from one end of the second slot portion region 262 formed on the one surface 270 of the conductive portion 230 to one edge of the conductive portion 230. For example, the first length 1001a may be about 6.2 mm and the second length 1001b may be about 8.0 mm.

According to an embodiment of the disclosure, a second shape 1003 of the slot region 260 may have the length in the one direction (e.g., the (+)z-axis direction) on the one surface 270 of the conductive portion 230. The second shape 1003 of the slot region 260 may include the '1' shape. The second slot portion region 262 may include a first length 1003a and a second length 1003b. The first length 1003a indicates the distance from the one end of the second slot portion region 262 to the first slot portion region 261. For example, the first length 1003a may correspond to the length of the second region 662b of the second injection portion 662 of the injection molded product 660. The second length 1003b indicates the length from the one end of the second slot portion region 262 formed on the one surface 270 of the conductive portion 230 to the one edge of the conductive portion 230. For example, the first length 1003a may be about 6.2 mm and the second length 1003b may be about 6.7 mm. The length of the second length 1003b of the second shape 1003 may be shorter than the length of the second length 1001b of the first shape 1001.

According to an embodiment of the disclosure, the third shape 1005 of the slot region 260 may have the length in the one direction (e.g., the (+)z-axis direction) and a length in other direction (e.g., the (-)x-axis direction) on the one surface 270 of the conductive portion 230. The third shape 1005 of the slot region 260 may include a 'Γ' shape. The second slot portion region 262 may include a first length 1005a and a second length 1005b. The first length 1005a indicates the distance from the one end of the second slot portion region 262 to the first slot portion region 261. The second length 1005b indicates a length extended from the one surface 270 of the conductive portion 230 in the other direction (e.g., the (-)x-axis direction). For example, the first length 1005a may be about 2.7 mm and the second length 1005b may be about 3.5 mm.

According to an embodiment of the disclosure, a fourth shape 1007 of the slot region 260 may have the length in the one direction (e.g., (+)z-axis direction) and the length in the other direction (e.g., (-)x-axis direction) on the one surface 270 of the conductive portion 230. The third shape 1007 of the second slot portion region 262 may include the 'Γ' shape. The second slot portion region 262 may include a first length 1007a and a second length 1007b. The first length 1007a indicates the distance from the one end of the second slot portion region 262 to the first slot portion region 261. The second length 1007b indicates the length extending from the one surface 270 of the conductive portion 230 in the other direction (e.g., the (-)x-axis direction). For example, the first length 1007a may be about 2.7 mm and the second length 1007b may be about 5.5 mm.

Referring to FIG. 10B, a graph 1050 indicates antenna total efficiency for each frequency. In FIG. 10B, antenna performance for each shape of the slot region 260 according to the third method of FIG. 7E (e.g., the rear feeding of the feeding structure 766 and the side contact of the ground structure 788) will be described. A first line 1061 indicates the antenna total efficiency in the first shape 1001 of the slot region 260. A second line 1063 indicates the antenna total efficiency in the second shape 1003 of the slot region 260. A third line 1065 indicates the antenna total efficiency in the third shape 1005 of the slot region 260. A fourth line 1067 indicates the antenna total efficiency in the fourth shape 1007 of the slot region 260.

Referring to the graph 1050, it may be identified that the first line 1061 and the second line 1063 provide higher antenna total efficiency than the third line 1065 and the fourth line 1067. The performance of a slot antenna may be related to a size of a slot (e.g., a length of the slot and a width of the slot). Herein, the length of the slot means a length formed in one direction so that a current may flow. In order to secure the antenna total efficiency of the slot antenna, it is required that the physical length of the slot be sufficiently secured. The second slot portion region 262 may extend from the first slot portion region 261. The length of the second slot portion region 262 may extend in various directions from the first slot portion region 261. For example, the length of the second slot portion region 262 may extend in a first direction (e.g., the (+)z-axis direction). The length of the second slot portion region 262 may extend in a second direction (e.g., the (-)x-axis direction). At this time, the antenna total efficiency of the slot antenna may be determined based on a length from the first slot portion region 261 to the direction extending (e.g., the first direction or the second direction). Referring to the second line 1063 and the third line 1065, it may be identified that the '1' shape provides higher radiation efficiency than the 'Γ' shape even at a same length (e.g., 6.2mm). Meanwhile, it may be identified that an influence of an opening region in another direction other than the width and length configuring the slot region 260 is relatively low compared to an influence of a shape. For example, a length in the (-)z-axis direction does not substantially affect the radiation performance of the slot antenna using the slot region 260. This is because an opening surface formed by a portion of the second slot portion region 262 extended in the (+)z-axis direction and the first slot portion region 261 operate as a radiator of the slot antenna as one slot.

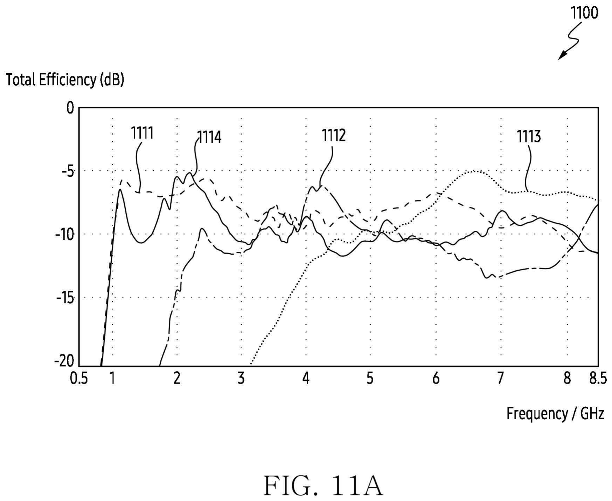

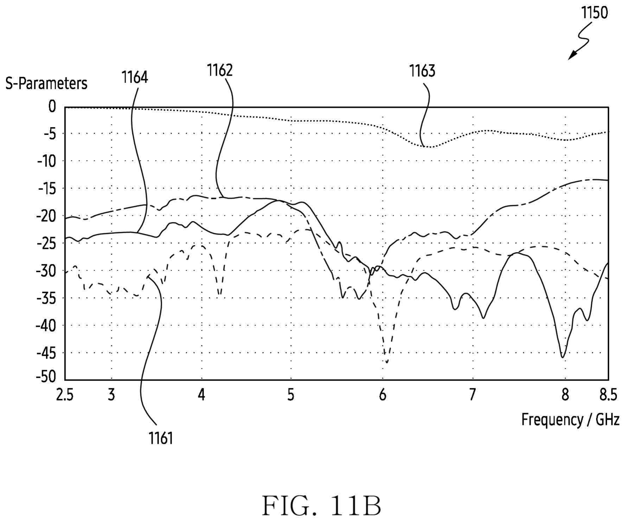

FIGS. 11A and 11B illustrate an antenna performance of an electronic device according to various embodiments of the disclosure. The same reference number may be referenced for the same description between drawings. The electronic device 101 may include four antennas within a portion (e.g., a portion 312). The four antennas may include the first antenna 301, the second antenna 302, the third antenna 303, and the fourth antenna 304 of FIGS. 3A and 3B. For example, the first antenna 301 may include an IFA type antenna in which one region 391 of the conductive portion 230 operates as a radiator. For example, the second antenna 302 may include an IFA type antenna in which one region 392 of the conductive portion 230 operates as a radiator. For example, the third antenna 303 may include a slot antenna in which a slot structure of the conductive portion 230 operates as a radiator. For example, the fourth antenna 304 may include an IFA type antenna in which the conductive portion 235 operates as a radiator.

Referring to FIG. 11A, a graph 1100 indicates antenna total efficiency for each frequency. A first line 1111 indicates the antenna total efficiency of the first antenna 301. A second line 1112 indicates the antenna total efficiency of the second antenna 302. A third line 1113 indicates the antenna total efficiency of the third antenna 303. A fourth line 1114 indicates the antenna total efficiency of the fourth antenna 304.

The first antenna 301 may transmit a first signal on a first frequency band (e.g., the GPS L1 band). For example, since the efficiency of the first line 1111 is highest in the range of about 1.5 GHz to 1.6 GHz, it may be identified that isolation performance of the first antenna 301 with respect to other antennas is secured. In addition, the second antenna 302 may transmit a second signal on a second frequency band (e.g., the n79 band). For example, since the efficiency of the second line 1112 is highest in the range of about 4.4 GHz to 5.0 GHz, it may be identified that the isolation performance of the second antenna 302 with respect to the other antennas is secured. In addition, the fourth antenna 304 may transmit a fourth signal on a fourth frequency band (e.g., the 2.4 GHz band of WLAN). For example, since the efficiency of the fourth line 1114 is highest in the range of about 2.4 GHz to 2.5 GHz, it may be identified that the isolation performance of the fourth antenna 304 with respect to the other antennas is secured.

According to an embodiment of the disclosure, the third antenna 303 may transmit a third signal on a third frequency band (e.g., the UWB channel 5 and the UWB channel 9). For example, assuming the UWB channel 5, since the efficiency of the third line 1113 is highest within the range of about 6.25 GHz to 6.75 GHz, it may be identified that the isolation performance of the third antenna 303 with respect to the other antennas is secured. In addition, for example, assuming the UWB channel 9, since the efficiency of the third line 1113 is highest within the range of about 7.75 GHz to 8.25 GHz, it may be identified that the isolation performance of the third antenna 303 with respect to the other antennas is secured.

Referring to FIG. 11B, a graph 1150 illustrates S-parameters for each frequency. The first line 1161 indicates a pass coefficient (e.g., transmission coefficient) from the third antenna 303 to the first antenna 301. The second line 1162 indicates a pass coefficient from the third antenna 303 to the second antenna 302. The third line 1163 indicates a pass coefficient from the third antenna 303 to the third antenna 303. The fourth line 1164 indicates a pass coefficient from the third antenna 303 to the fourth antenna 304.

Since the third line 1163 is a pass coefficient with respect to the same antenna, it may be substantially close to 0 dB. Referring to the first line 1161, the second line 1162, and the fourth line 1164, since a pass coefficient less than or equal to a certain reference value (e.g., -15dB) is provided, the graph 1150 may indicate that the signal component of the third antenna 303 does not flow well into another antenna. In other words, the graph 1150 may indicate that isolation performance between antennas according to FIGS. 3A and 3B is guaranteed at a certain level or higher.

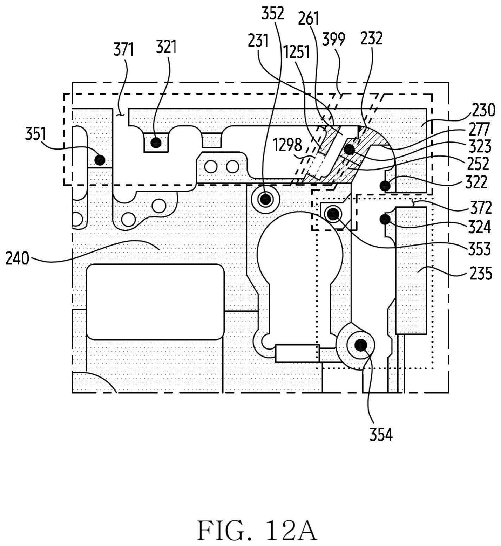

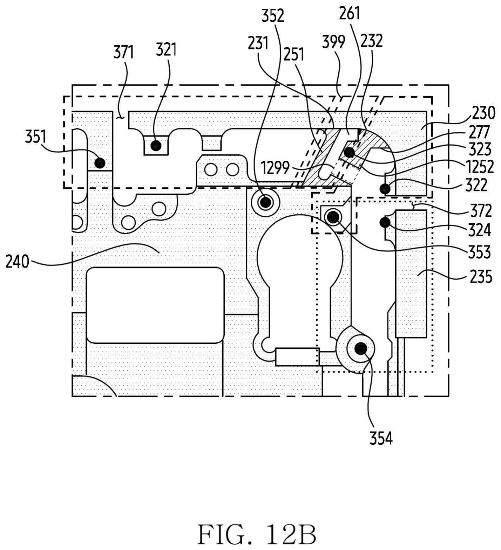

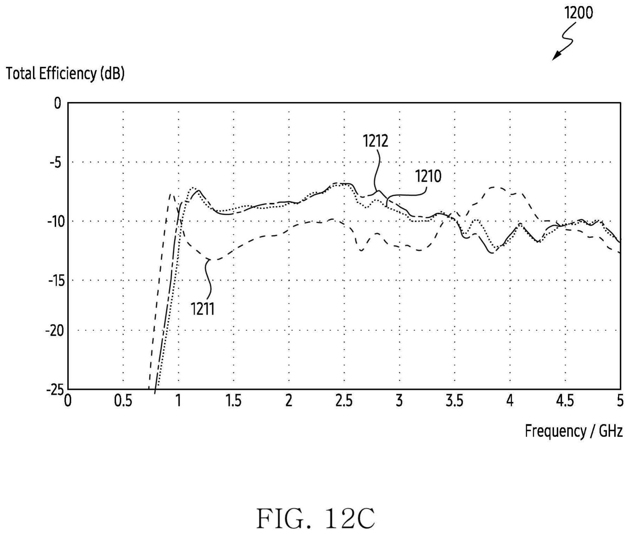

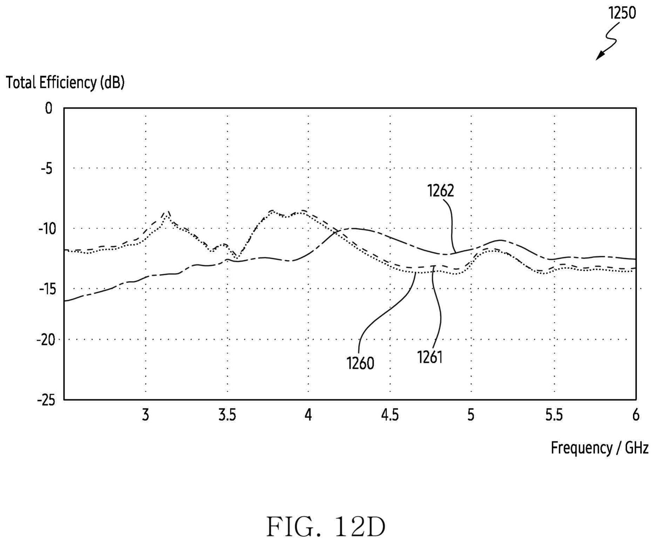

FIGS. 12A, 12B, 12C, and 12D illustrate an antenna performance of a slot antenna according to various embodiments of the disclosure. The same reference number may be referenced for the same description between drawings. The electronic device 101 may include the first antenna 301, the second antenna 302, the third antenna 303, and/or the fourth antenna 304 of FIGS. 3A and 3B. The third antenna 303 may be a slot antenna, and the first antenna 301, the second antenna 302, and/or the fourth antenna 304 may be an IFA type antenna. In a slot structure of the third antenna 303, when the first connection portion 251 or the second connection portion 252 is not present, the third antenna 303 may operate as the IFA type antenna. However, when the third antenna 303 is implemented as the IFA type antenna, isolation performance with respect to other antennas (e.g., the first antenna 301 or the second antenna 302) may be lowered.

FIG. 12A illustrates an antenna structure in which the first connection portion 251 of the bridge portion 277 of FIG. 3A is opened. The bridge portion 277 may include a first connection portion 1251 instead of the first connection portion 251. According to an embodiment of the disclosure, a segment portion 1298 may be formed in the first connection portion 1251.

FIG. 12B illustrates an antenna structure in which the second connection portion 252 of the bridge portion 277 of FIG. 3A is opened. The bridge portion 277 may include a second connection portion 1252 instead of the second connection portion 252. A segment portion 1299 may be formed in the second connection portion 1252.

Referring to FIG. 12C, a graph 1200 illustrates antenna total efficiency for each frequency of the first antenna 301.

The first line 1210 indicates the antenna total efficiency of the first antenna 301 when the third antenna 303 is implemented as a slot antenna including the slot structure.

The second line 1211 indicates the antenna total efficiency of the first antenna 301 when the third antenna 303 is implemented as the IFA type antenna (e.g., an antenna having the first connection portion 1251 and the segment portion 1298) with a segment portion formed in the first connection portion 251. For the IFA type antenna, the antenna structure of FIG. 12A may be referred to.

The third line 1212 indicates the antenna total efficiency of the first antenna 301 when the third antenna 303 is implemented as the IFA type antenna (e.g., an antenna having the second connection portion 1252 and the segment portion 1299) with a segment portion formed in the second connection portion 252. For the IFA type antenna, the antenna structure of FIG. 12B may be referred to. Referring to the graph 1200, it may be identified that radiation performance of the second line 1211 is degraded as the first connection portion 251, which is a ground path of the first antenna 301, is opened.

Referring to FIG. 12D, a graph 1250 illustrates the antenna total efficiency for each frequency of the second antenna 302. A first line 1260 indicates the antenna total efficiency of the second antenna 302 when the third antenna 303 is implemented as the slot antenna having the slot structure. The second line 1261 indicates the antenna total efficiency of the second antenna 302 when the third antenna 303 is implemented as the IFA type antenna (e.g., the antenna of FIG. 12A having the first connection portion 1251 and the segment portion 1298) with a segment portion formed in the first connection portion 251. The third line 1262 indicates the antenna total efficiency of the second antenna 302 when the third antenna 303 is implemented as the IFA type antenna (e.g., the antenna of FIG. 12B having the second connection portion 1252 and a segment portion 1299) with a segment portion formed in the second connection portion 252. Referring to the graph 1250, it may be identified that the radiation performance of the third line 1262 is degraded as the second connection portion 252, which is the ground path of the second antenna 302, is opened.

Referring to the graphs 1200 and 1250, an antenna radiation structure for securing isolation performance and overcoming structural constraints may be achieved through a bridge portion (e.g., the bridge portion 277) and a slot region (e.g., the slot region 260) formed within a conductive portion while maintaining radiation efficiency of the first antenna 301 and the second antenna 302 at the same level. For example, by disposing a slot antenna on a top surface of the electronic device 101, the electronic device 101 may provide a radiation pattern for UWB ranging without a separate metal structure (e.g., LDS and/or SUS).

Embodiments of the disclosure propose a technology for utilizing an additional antenna without expanding an antenna design space within a limited space of the electronic device 101. A slot antenna for improving the radiation pattern may be provided by forming a slot in the bridge portion between a conductive portion (e.g., the conductive portion 230) of a metal frame (e.g., the metal frame 220) and a support (e.g., the support portion 240). The slot region of the slot antenna may include an opening formed on one surface of the bridge portion and an opening formed on one surface of the conductive portion in order to secure a slot length. The slot region formed in the bridge portion may not only increase spatial efficiency of the electronic device 101, but also provide high isolation performance of adjacent antennas with respect to the slot antenna. Accordingly, antenna radiation efficiency of the antennas of the electronic device 101 may increase.

Effects obtainable in the disclosure are not limited to the effects mentioned above, and other effects not mentioned will be clearly understood by those having ordinary knowledge in the art to which the disclosure belongs from the description below.

An electronic device 101 according to embodiments is provided. The electronic device 101 may comprise a wireless communication circuit, a housing 420 comprising a metal frame 220 having a slot region 260, and a display 210. The metal frame 220 may comprise a conductive portion 230 formed at an edge of the metal frame 220, a support portion 240 formed within the metal frame 220, and a bridge portion formed between the conductive portion 230 and the support portion 240. The bridge portion may comprise a first connection portion 251 disposed between a first region 231 of the conductive portion 230 and the support portion 240 and a second connection portion 252 disposed between a second region 232 of the conductive portion 230 and the support portion 240. The slot region 260 may comprise a first slot portion region 261 and a second slot portion region 262. The first slot portion region 261 may be formed to penetrate one surface of the bridge portion in a direction in which a display region of the display faces, between the first connection portion 251 of the bridge portion and the second connection portion 252 of the bridge portion. The second slot portion region 262 may be formed to penetrate one surface 270 of the conductive portion 230 in a direction toward a side of the display region, between the first region 231 of the conductive portion 230 and the second region 232 of the conductive portion 230. The wireless communication circuit may be configured to perform a communication based on the slot region 260.

For example, the electronic device 101 may further comprise a support housing 410. The housing 420 may be coupled to the support housing 410 so as to be movable along a first direction drawn out from the support housing 410 or a second direction opposite to the first direction. The one surface 270 of the conductive portion 230 may be disposed to face the second direction.

For example, the electronic device 101 may comprise a plate comprising a first surface facing the first direction and a second surface facing the second direction. The electronic device 101 may comprise an injection molded product for occupying a space corresponding to the slot region 260. The injection molded product may be disposed on the first surface of the plate.

For example, the second slot portion region 262 may be formed to extend from the first slot portion region 261.

For example, the conductive portion 230 may be disposed between a first non-conductive portion 371 of the housing 420 and a second non-conductive portion 372 of the housing 420. The conductive portion 230 may comprise a first end adjacent to the first non-conductive portion 371 and a second end adjacent to the second non-conductive portion 372. A first signal on a first frequency band may be provided from a first feeding portion 321 between the first end and the first region 231. A second signal on a second frequency band may be provided from a second feeding portion 322 between the second end and the second region 232.

For example, the first connection portion 251 may be used as a ground for the first signal. The second connection portion 252 may be used as a ground for the second signal.

For example, the communication may comprise a transmission of a third signal on a frequency band of an ultra-wide band (UWB). The frequency band of the UWB may comprise a frequency band of channel 5 with a center frequency being about 6489.6 megahertz (MHz) or a frequency band of channel 9 with a center frequency being about 7987.2 MHz.

For example, the electronic device 101 may comprise an additional conductive portion 235 disposed adjacent to the second non-conductive portion 372. The additional conductive portion 235 may be used as a radiator for a fourth signal on a fourth frequency band. The fourth frequency band may comprise a frequency band for wireless local area network (WLAN).

For example, the direction toward the side may comprise a direction toward the top of the electronic device 101. The first non-conductive portion 371 may be disposed on one surface facing the top of the electronic device 101. The second non-conductive portion 372 may be disposed on one surface facing the left side or right side of the electronic device 101.

For example, the first slot portion region 261 may comprise an opening formed on the one surface of the bridge portion. The second slot portion region 262 may comprise an opening formed on the one surface 270 of the conductive portion 230. The one surface of the bridge portion may be not parallel to the one surface 270 of the conductive portion 230.

For example, the electronic device 101 may comprise a communication module comprising a plurality of antenna elements. The one surface 270 of the conductive portion 230 may comprise a plurality of radiation holes 961 for the communication module. At least one of the plurality of radiation holes 961 may be at least a part of the second slot portion region 262.

For example, the electronic device 101 may further comprise a speaker. The one surface 270 of the metal frame 220 may comprise a plurality of speaker holes 931 for the speaker. At least one of the plurality of speaker holes 931 may be at least a part of the second slot portion region 262.

For example, the second slot portion region 262 may have a straight shape, an 'L' shape, or a 'T' shape on the one surface 270 of the conductive portion 230.

For example, the electronic device 101 may comprise a ground structure 777 disposed on one surface of the first connection portion 251. The electronic device 101 may comprise a feeding structure 766 disposed on one surface of the second connection portion 252. The wireless communication circuit may be configured to provide a signal through the feeding structure 766.

For example, the conductive portion 230 may comprise a protrusion portion 791 protruding in a direction toward the support portion 240. A ground structure 788 may be disposed on one surface of the protrusion portion. A feeding structure 766 may be disposed on one surface of the second connection portion 252. The wireless communication circuit may be configured to provide a signal through the feeding structure 766.

For example, the conductive portion 230 may comprise a first end and a second end formed along the edge. The conductive portion 230 may comprise a first protrusion portion 791 and a second protrusion portion 792 protruded in a direction toward the support portion 240. The first protrusion portion 791 may be formed between the first end and the first region 231. The second protrusion portion 792 may be formed between the second end and the second region 232. A ground structure 788 may be disposed on one surface of the first protrusion portion 791. A feeding structure 799 may be disposed on one surface of the second protrusion portion 792. The wireless communication circuit may be configured to provide a signal through the feeding structure 799.

For example, the ground structure 788 may be disposed on one surface of the first protrusion portion 791 in a direction toward the side of the display region. The feeding structure 799 may be disposed on one surface of the second protrusion portion 792 in a direction toward the side of the display region.

For example, the electronic device 101 may comprise a ground structure 777 disposed on one surface of the support portion 240. The electronic device 101 may comprise a feeding structure 766 disposed on one surface of the second connection portion 252. The wireless communication circuit may be configured to provide a signal through the feeding structure 766.

For example, the electronic device 101 may further comprise an injection molded product 660 for occupying the slot region 260. The injection molded product may include a first injection portion 661 for the first slot portion region 261 and a second injection portion 662 for the second slot portion region 262. The second injection portion 662 may comprise a first portion 662a formed along one direction toward the display 210 and a second portion 662b formed along a direction opposite to the one direction, based on a region where the first injection portion 661 and the second injection portion 662 are coupled.

For example, a length of the second portion 662b may be longer than a length of the first portion 662a based on the one direction.

An electronic device 101 according to embodiments of the disclosure is provided. The electronic device 101 may comprise a wireless communication circuit, a housing 420 comprising a metal frame 220 having a slot region 260, and a display 210. The metal frame 220 may comprise a conductive portion 230 formed at an edge of the metal frame 220, a support portion 240 formed within the metal frame 220, and a bridge portion formed between the conductive portion 230 and the support portion 240. The bridge portion may comprise a first connection portion 251 disposed between a first region 231 of the conductive portion 230 and the support portion 240 and a second connection portion 252 disposed between a second region 232 of the conductive portion 230 and the support portion 240. The slot region 260 may comprise a first slot portion region 261 and a second slot portion region 262. The first slot portion region 261 may be formed on one surface of the bridge portion in a direction in which a display region of the display 210 faces, between the first connection portion 251 of the bridge portion and the second connection portion 252 of the bridge portion. The second slot portion region 262 may be formed on one surface 270 of the conductive portion 230 in a direction toward a side of the display region, between the first region 231 of the conductive portion 230 and the second region 232 of the conductive portion 230. The wireless communication circuit may be configured to perform a communication based on the slot region 260.

According to embodiments, the electronic device is provided. The electronic device comprises a housing comprising a metal frame having a slot region and a wireless communication circuit configured to perform a communication through the slot region. The metal frame includes a conductive portion at least partially formed along a periphery of the metal frame, a support portion of the metal frame, and a bridge portion formed between the conductive portion and the support portion. The bridge portion includes a first connection portion disposed between a first region of the conductive portion and the support portion, and includes a second connection portion disposed between a second region of the conductive portion and the support portion. The slot region includes a first slot portion region and a second slot portion region. The first slot portion region is formed, extending in a direction from the second slot portion region toward an interior of the housing, between the first connection portion of the bridge portion and the second connection portion of the bridge portion. The second slot portion region is formed, extending at least partially from a front side to a rear side of the housing, between the first region of the conductive portion and the second region of the conductive portion.

For example, the housing includes a first housing part and a second housing part movably engaged with the first housing part. The first housing part includes the metal frame.

For example, the electronic device comprises a plate including a first surface facing a first direction toward the interior of the housing and a second surface facing the second direction. The electronic device comprises a non-conductive component for occupying a space corresponding to the slot region. At least partially of the non-conductive component is disposed on the first surface of the plate.

For example, the electronic device comprises a feeding structure disposed on one surface of the first connection portion or the second connection portion, which is electrically connected to the slot region. The wireless communication circuit is configured to provide signals to the feeding structure to radiate the signals through the slot region.

For example, the conductive portion is disposed between a first non-conductive portion of the housing and a second non-conductive portion of the housing. The conductive portion includes a first end adjacent to the first non-conductive portion and a second end adjacent to the second non-conductive portion. The wireless communication circuit is configured to transmit or receive first signals on a first frequency band through a first feeding portion between the first end and the first region. The wireless communication circuit is configured to transmit or receive second signals on a second frequency band through a second feeding portion between the second end and the second region.

For example, the first connection portion is used as a ground for the first signal. The second connection portion is used as a ground for the second signal.

For example, the communication includes a transmission of third signals on a frequency band of an ultra-wide band (UWB).

For example, the electronic device comprises an additional conductive portion disposed adjacent to the second non-conductive portion. The wireless communication circuit is configured to transmit or receive fourth signals on a fourth frequency band through the additional conductive portion. The fourth frequency band includes a frequency band for wireless local area network (WLAN).

For example, the electronic device comprises the first non-conductive portion is disposed on one surface facing a top side of the housing. The second non-conductive portion is disposed on one surface facing left side or right side of the housing.

For example, the electronic device comprises a non-conductive component. At least part of the non-conductive component is disposed within a first space of the first slot portion region. At least another part of the non-conductive component is disposed within a second space of the second slot portion region.

For example, the electronic device comprises a communication module comprising a plurality of antenna elements. One surface of the conductive portion includes a plurality of radiation holes for the communication module. At least a part of the second slot portion region is formed on at least one radiation hole of the plurality of radiation holes includes.

For example, the electronic device comprises a speaker. One surface of the conductive portion includes a plurality of speaker holes for the speaker. At least a part of the second slot portion region is formed on at least speaker hole of the plurality of speaker holes.

For example, the second slot portion region has a straight shape, an 'L' shape, or a 'T' shape on the one surface of the conductive portion.

For example, the electronic device comprises a ground structure for the slot region and a feeding structure for the slot region. The wireless communication circuit is configured to feed signals to the feeding structure to radiate the signals through the slot region.

For example, the conductive portion includes a protrusion portion protruding in a direction toward the support portion. The ground structure is disposed on one surface of the protrusion portion. The feeding structure is disposed on one surface of the second connection portion.

For example, the conductive portion includes a first end and a second end formed along the edge. The conductive portion includes a first protrusion portion and a second protrusion portion protruded in a direction toward the support portion. The first protrusion portion is formed between the first end and the first region. The second protrusion portion is formed between the second end and the second region. The ground structure is disposed on one surface of the first protrusion portion. The feeding structure is disposed on one surface of the second protrusion portion.

For example, the one surface of the first protrusion portion faces a direction from the rear side to the front side of the housing. The one surface of the second protrusion portion faces the direction from the rear side to the front side of the housing.

For example, the ground structure is disposed on one surface of the support portion. The feeding structure is disposed on one surface of the second connection portion.

For example, the electronic device comprises a non-conductive component for occupying a space corresponding to the slot region. The non-conductive component includes a first non-conductive portion for the first slot portion region and a second non-conductive portion for the second slot portion region. The second non-conductive portion includes. a first portion formed along one direction toward the front of housing, extended from a region where the first non-conductive portion and the second non-conductive portion are coupled. The second non-conductive portion includes a second portion formed along a direction opposite to the one direction extended from the region where the first non-conductive portion and the second non-conductive portion are coupled.

For example, a length of the second portion is longer than a length of the first portion.

According to embodiments, an electronic device is provided. The electronic device comprises a housing comprising a frame having a region configured to function as a slot antenna and a wireless communication circuit configured to perform a communication through the region. The frame includes a conductive portion at least partially formed along a periphery of the frame, a support portion of the frame, and a bridge portion formed between the conductive portion and the support portion. The bridge portion includes a first connection portion disposed between a first region of the conductive portion and the support portion, and includes a second connection portion disposed between a second region of the conductive portion and the support portion. The region includes a first elongated portion having a first longitudinal direction toward an interior of the housing, between the first connection portion of the bridge portion and the second connection portion of the bridge portion. The region includes a second elongated portion having a second longitudinal direction at least partially from a rear side to a front side of the housing, between the first region of the conductive portion and the second region of the conductive portion.

For example, the wireless communication circuit is configured to transmit or receive signals on a frequency band in accordance with a length of the first elongated portion in the first longitudinal direction and a length of the second elongated portion in the second longitudinal direction.

For example, the housing includes a first housing part and a second housing part movably engaged with the first housing part. The first housing part includes the frame.

For example, the electronic device comprises a plate including a first surface facing a first direction toward the interior of the housing and a second surface facing a second direction opposite to the first direction. The electronic device comprises a non-conductive component for occupying a space corresponding to the region. At least partially of the non-conductive component is disposed on the first surface of the plate.

For example, the conductive portion is disposed between a first non-conductive portion of the housing and a second non-conductive portion of the housing. The conductive portion includes a first end adjacent to the first non-conductive portion and a second end adjacent to the second non-conductive portion. The wireless communication circuit is configured to transmit or receive first signals on a first frequency band through a first feeding portion between the first end and the first region of the conductive portion, and transmit or receive second signals on a second frequency band through a second feeding portion between the second end and the second region of the conductive portion.

For example, the first connection portion is used as a ground for the first signal. The second connection portion is used as a ground for the second signal.

For example, the communication includes a transmission of third signals on a frequency band of an ultra-wide band (UWB).

For example, the electronic device further comprises an additional conductive portion disposed adjacent to the second non-conductive portion. The wireless communication circuit is configured to transmit or receive fourth signals on a fourth frequency band through the additional conductive portion. The fourth frequency band includes a frequency band for wireless local area network (WLAN).

For example, the electronic device comprises a feeding structure disposed on one surface of the first connection portion of the bridge portion or the second connection portion of the bridge portion. The frame corresponds to a metal frame. The wireless communication circuit is configured to provide signals to the first connection portion or the second connection portion through the feeding structure.

For example, the electronic device comprises a non-conductive component. At least part of the non-conductive component is disposed within a first space of the first elongated portion. At least another part of the non-conductive component is disposed within a second space of the second elongated portion.

For example, the electronic device comprises a communication module comprising a plurality of antenna elements. One surface of the conductive portion includes a plurality of radiation holes for the communication module. At least a part of the second elongated portion is formed on at least one radiation hole of the plurality of radiation holes.

For example, the electronic device comprises a speaker. One surface of the conductive portion includes a plurality of speaker holes for the speaker. At least a part of the second elongated portion is formed on at least speaker hole of the plurality of speaker holes.

For example, the second elongated portion has a straight shape, an 'L' shape, or a 'T' shape on the one surface of the conductive portion.

For example, the electronic device comprises a ground structure for the region and a feeding structure for the region. The wireless communication circuit is configured to feed signals to the feeding structure to radiate the signals through the region.

For example, the conductive portion includes a protrusion portion protruding in a direction toward the support portion. The ground structure is disposed on one surface of the protrusion portion. The feeding structure is disposed on one surface of the second connection portion.

For example, the conductive portion includes a first end and a second end formed along the edge. The conductive portion includes a first protrusion portion and a second protrusion portion protruded in a direction toward the support portion. The first protrusion portion is formed between the first end and the first region of the conductive portion. The second protrusion portion is formed between the second end and the second region of the conductive portion. The ground structure is disposed on one surface of the first protrusion portion. The feeding structure is disposed on one surface of the second protrusion portion.

For example, the one surface of the first protrusion portion faces a direction from the rear side to the front side of the housing. The one surface of the second protrusion portion faces the direction from the rear side to the front side of the housing.

For example, the ground structure is disposed on one surface of the support portion. The feeding structure is disposed on one surface of the second connection portion.

For example, the electronic device comprises a non-conductive component for occupying a space corresponding to the region. The non-conductive component includes a first non-conductive portion for the first elongated portion and a second non-conductive portion for the second elongated portion. The second elongated portion includes a first portion formed along one direction toward the front of housing, extended from a region where the first non-conductive portion and the second non-conductive portion are coupled. The second elongated portion includes a second portion formed along a direction opposite to the one direction extended from the region where the first non-conductive portion and the second non-conductive portion are coupled.

For example, a length of the second portion is longer than a length of the first portion.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment of the disclosure, a method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments of the disclosure, each component (e.g., a module or a program) of the above-described components may include a single entity or multiple entities, and some of the multiple entities may be separately disposed in different components. According to various embodiments of the disclosure, one or more of the above-described components may be omitted, or one or more other components may be added. Alternatively or additionally, a plurality of components (e.g., modules or programs) may be integrated into a single component. In such a case, according to various embodiments of the disclosure, the integrated component may still perform one or more functions of each of the plurality of components in the same or similar manner as they are performed by a corresponding one of the plurality of components before the integration. According to various embodiments of the disclosure, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a housing comprising a frame having a region configured to function as a slot antenna; and
a wireless communication circuit configured to perform a communication through the region,
wherein the frame includes a conductive portion at least partially formed along a periphery of the frame, a support portion of the frame, and a bridge portion formed between the conductive portion and the support portion,
wherein the bridge portion includes a first connection portion disposed between a first region of the conductive portion and the support portion, and includes a second connection portion disposed between a second region of the conductive portion and the support portion,
wherein the region includes:
a first elongated portion having a first longitudinal direction toward an interior of the housing, between the first connection portion of the bridge portion and the second connection portion of the bridge portion, and
a second elongated portion having a second longitudinal direction at least partially from a rear side to a front side of the housing, between the first region of the conductive portion and the second region of the conductive portion.

2. The electronic device of claim 1,
wherein the wireless communication circuit is configured to transmit or receive signals on a frequency band in accordance with a length of the first elongated portion in the first longitudinal direction and a length of the second elongated portion in the second longitudinal direction.

3. The electronic device of claim 1,
wherein the housing includes a first housing part and a second housing part movably engaged with the first housing part, and
wherein the first housing part includes the frame.

4. The electronic device of claim 3, further comprising:
a plate including a first surface facing a first direction toward the interior of the housing and a second surface facing a second direction opposite to the first direction; and
a non-conductive component for occupying a space corresponding to the region,
wherein at least partially of the non-conductive component is disposed on the first surface of the plate.

5. The electronic device of claim 1,
wherein the conductive portion is disposed between a first non-conductive portion of the housing and a second non-conductive portion of the housing,
wherein the conductive portion includes a first end adjacent to the first non-conductive portion and a second end adjacent to the second non-conductive portion,
wherein the wireless communication circuit is configured to:
transmit or receive first signals on a first frequency band through a first feeding portion between the first end and the first region of the conductive portion, and
transmit or receive second signals on a second frequency band through a second feeding portion between the second end and the second region of the conductive portion.

6. The electronic device of claim 5,
wherein the first connection portion is used as a ground for the first signal, and
wherein the second connection portion is used as a ground for the second signal.

7. The electronic device of claim 5, wherein the communication includes a transmission of third signals on a frequency band of an ultra-wide band (UWB).

8. The electronic device of claim 7, further comprising:
an additional conductive portion disposed adjacent to the second non-conductive portion,
wherein the wireless communication circuit is configured to transmit or receive fourth signals on a fourth frequency band through the additional conductive portion, and
wherein the fourth frequency band includes a frequency band for wireless local area network (WLAN).

9. The electronic device of claim 1, further comprising:
a feeding structure disposed on one surface of the first connection portion of the bridge portion or the second connection portion of the bridge portion,
wherein the frame corresponds to a metal frame, and
wherein the wireless communication circuit is configured to provide signals to the first connection portion or the second connection portion through the feeding structure.

10. The electronic device of claim 1, further comprising:
a non-conductive component,
wherein at least part of the non-conductive component is disposed within a first space of the first elongated portion, and
wherein at least another part of the non-conductive component is disposed within a second space of the second elongated portion.

11. The electronic device of claim 1, further comprising:
a communication module comprising a plurality of antenna elements,
wherein one surface of the conductive portion includes a plurality of radiation holes for the communication module, and
wherein at least a part of the second elongated portion is formed on at least one radiation hole of the plurality of radiation holes.

12. The electronic device of claim 1, further comprising:
a speaker,
wherein one surface of the conductive portion includes a plurality of speaker holes for the speaker, and
wherein at least a part of the second elongated portion is formed on at least speaker hole of the plurality of speaker holes.

13. The electronic device of claim 1, wherein the second elongated portion has a straight shape, an 'L' shape, or a 'T' shape on the one surface of the conductive portion.

14. The electronic device of claim 1, further comprising:
a ground structure for the region; and
a feeding structure for the region,
wherein the wireless communication circuit is configured to feed signals to the feeding structure to radiate the signals through the region.

15. The electronic device of claim 14,
wherein the conductive portion includes a protrusion portion protruding in a direction toward the support portion,
wherein the ground structure is disposed on one surface of the protrusion portion,
wherein the feeding structure is disposed on one surface of the second connection portion.
